# EUROPEAN PATENT SPECIFICATION

(11) **EP 4 314 972 B1**
(45) Date of publication and mention of the grant of the patent: **26.11.2025**
(21) Application number: 22712641.4
(22) Date of filing: 18.03.2022
(51) Int. Cl.: G05D 1/00, G06Q 10/20

(54) **DISPLAY APPARATUS AND COMMUNICATION SYSTEM**
ANZEIGEVORRICHTUNG UND KOMMUNIKATIONSSYSTEM
APPAREIL D'AFFICHAGE ET SYSTÈME DE COMMUNICATION

(30) Priority: 22.03.2021 JP 2021046758; 22.03.2021 JP 2021046773; 03.06.2021 JP 2021093753; 15.02.2022 JP 2022021281
(43) Date of publication of application: 07.02.2024
(73) Proprietor: Ricoh Company, Ltd., Tokyo 143-8555 (JP)
(72) Inventor: OHTSUKA, Aiko, Tokyo 143-8555 (JP); KUDO, Koichi, Tokyo 143-8555 (JP); AOKI, Junki, Tokyo 143-8555 (JP); BANDO, Hanako, Tokyo 143-8555 (JP); MUROI, Mototsugu, Tokyo 143-8555 (JP); HOSAKA, Kento, Tokyo 143-8555 (JP)
(74) Representative: Marks & Clerk LLP
(86) International application number: PCT/IB2022/052462
(87) International publication number: WO 2022/200949

(56) References cited:
- EP-A1- 3 772 217
- US-A1- 2009 032 326
- US-B2- 10 451 431

## Description

### [Technical Field]

The present disclosure relates to a display apparatus, a communication system, a display control method, and a recording medium.

### [Background Art]

The robot that is autonomously movable may be provided at a site, such as a factory or a warehouse. Such autonomous robot is used as, for example, an inspection robot or a service robot, and can perform a task such as inspection of equipment at the site in place of a human worker.

For example, the autonomous robot moves to a movement destination, which has been designated by an operator using location information or a name of the movement destination. For example, PTL 1 discloses an autonomous robot that autonomously moves to a movement destination designated using location information selected by a user.

### [Citation List]

### [Patent Literature]

[PTL 1]
Japanese Unexamined Patent Application Publication No. 2007-94743

US-A-2009-032326 discloses a navigation system, e.g., for a motor vehicle, for determining the route from a location of the navigation system to a destination point.

### [Summary of Invention]

### [Technical Problem]

However, according to the conventional method, the user is required to enter location information or a character string such as a keyword of a movement destination.

### [Solution to Problem]

The invention is set out in the appended set of claims.

### [Advantageous Effects of Invention]

According to one or more embodiments, operability for a user (operator) in selecting a movement destination of a mobile apparatus improves.

### [Brief Description of Drawings]

A more complete appreciation of the embodiments and many of the attendant advantages and features thereof can be readily obtained and understood from the following detailed description with reference to the accompanying drawings.
[FIG. 1]

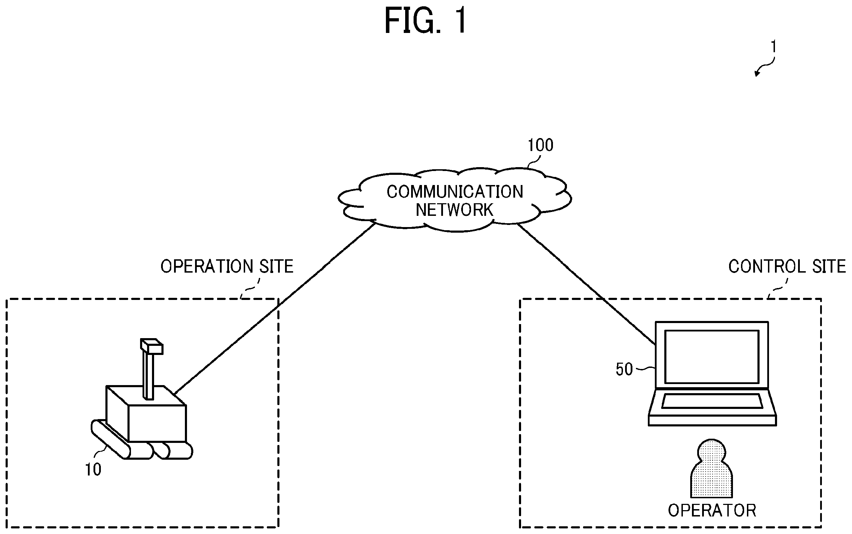

   FIG. 1 is a diagram illustrating an example configuration of a communication system according to an embodiment.
[FIG. 2]

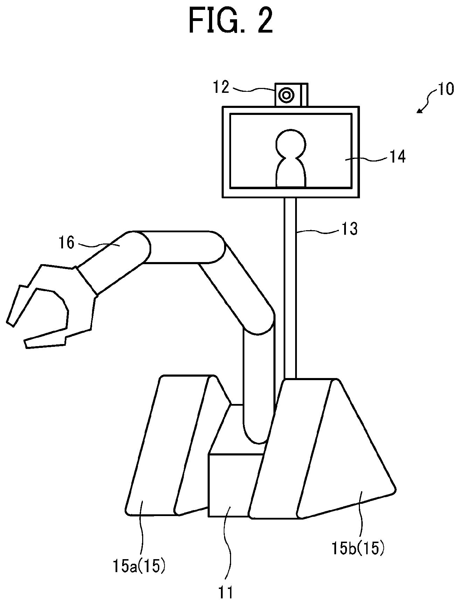

   FIG. 2 is a diagram illustrating a schematic diagram illustrating a configuration of a mobile apparatus, according to embodiments.
[FIG. 3]

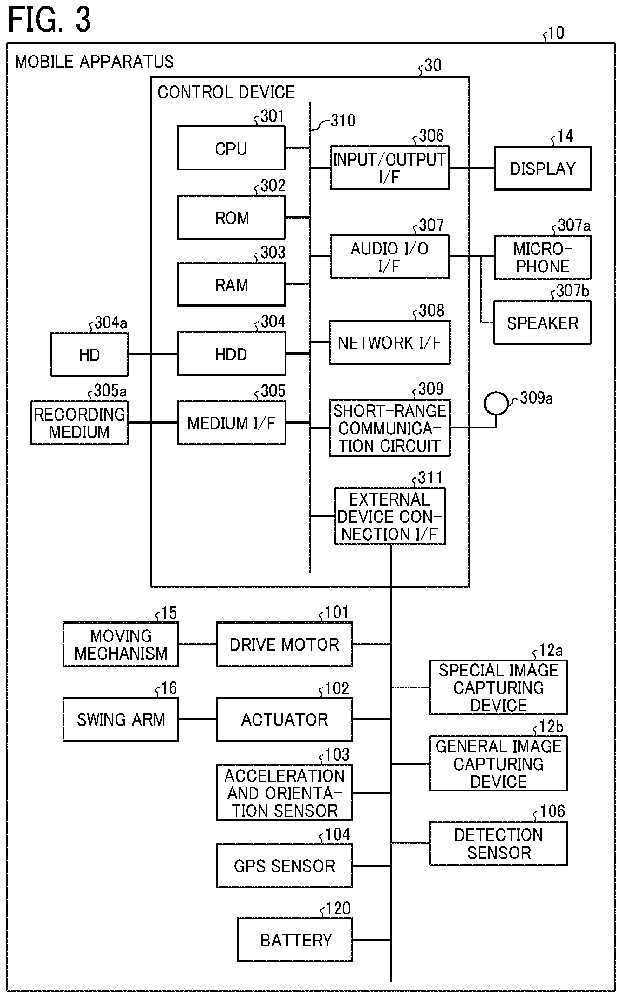

   FIG. 3 is a diagram illustrating an example of a hardware configuration of the mobile apparatus of FIG. 2.
[FIG. 4]

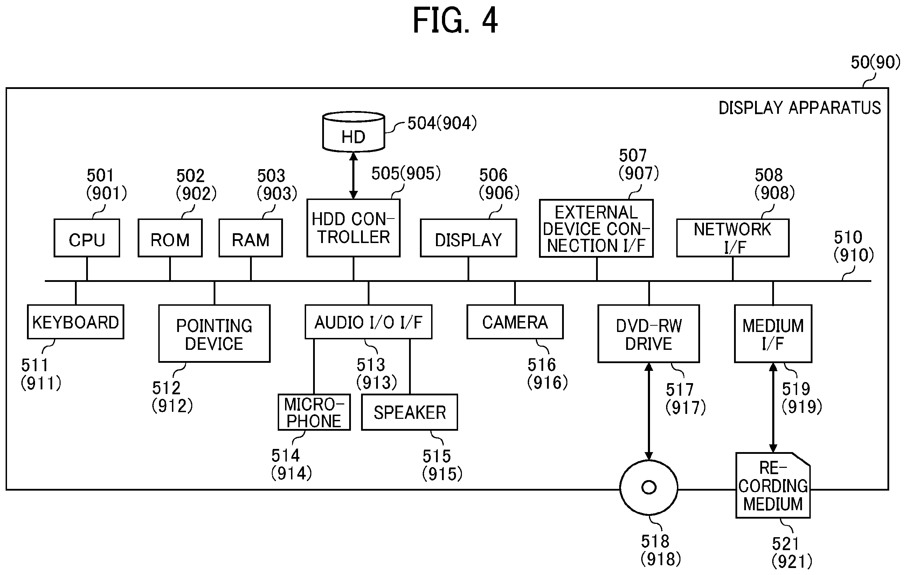

   FIG. 4 is a diagram illustrating an example of a hardware configuration of a display apparatus of the communication system of FIG. 1.
[FIG. 5]

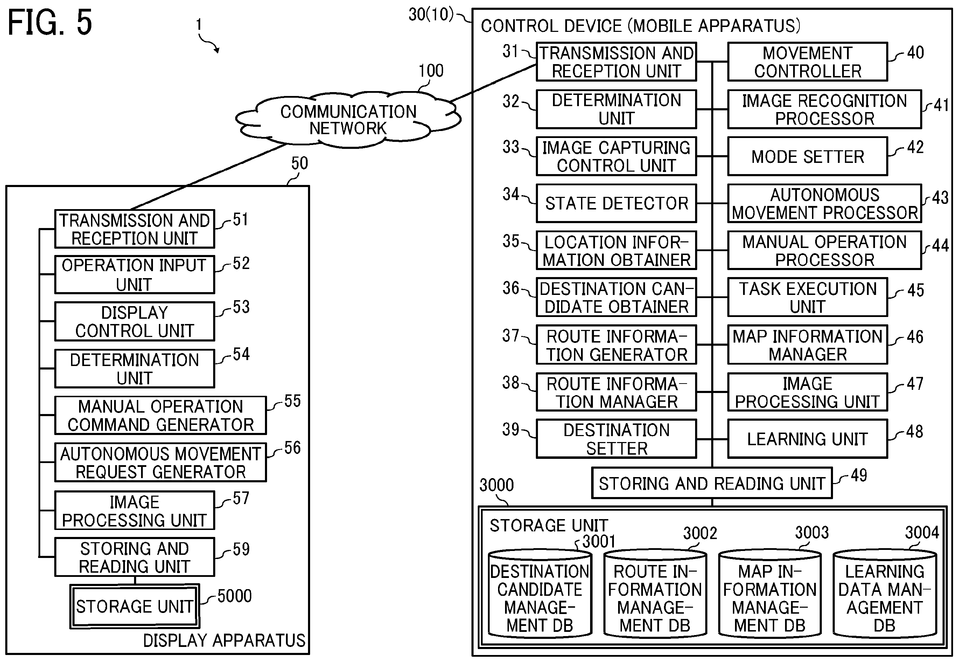

   FIG. 5 is a diagram illustrating an example of a functional configuration of the communication system of FIG. 1.
[FIG. 6]

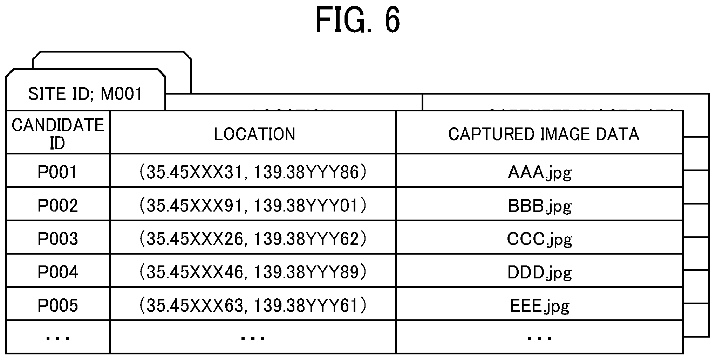

   FIG. 6 is a conceptual diagram illustrating an example of destination candidate management table.
[FIG. 7]

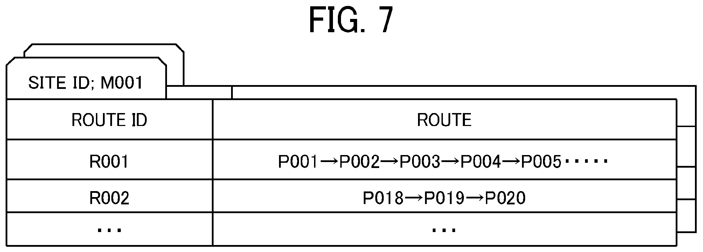

   FIG. 7 is a conceptual diagram illustrating an example of route information management table.
[FIG. 8]

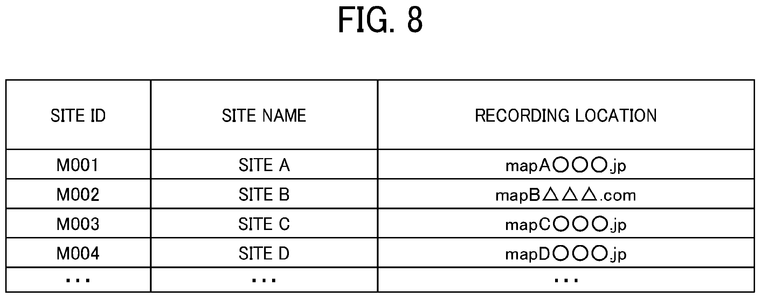

   FIG. 8 is a conceptual diagram illustrating an example of map information management table.
[FIG. 9]

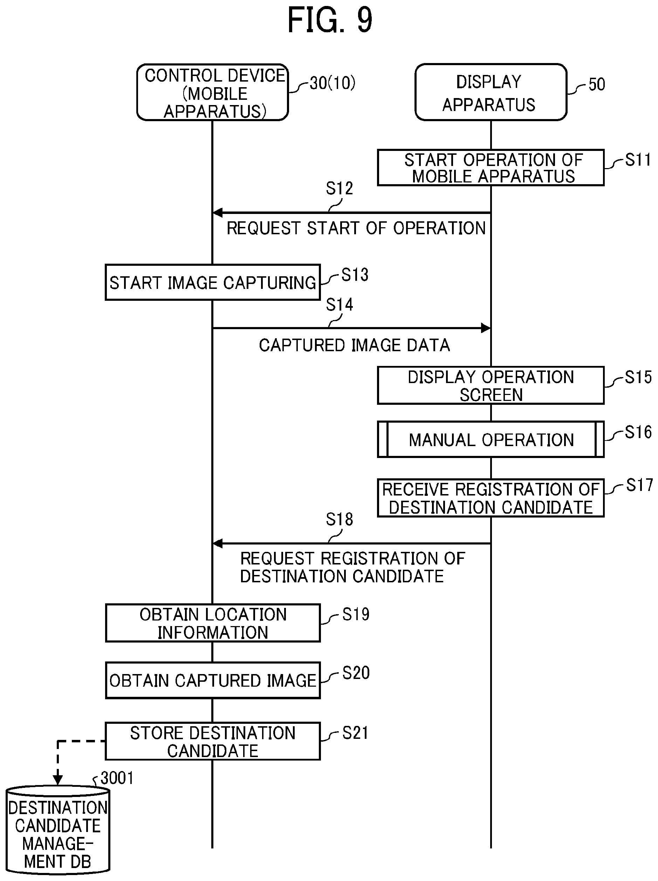

   FIG. 9 is a sequence diagram illustrating example processing of registering a destination candidate, according to the embodiment.
[FIG. 10]

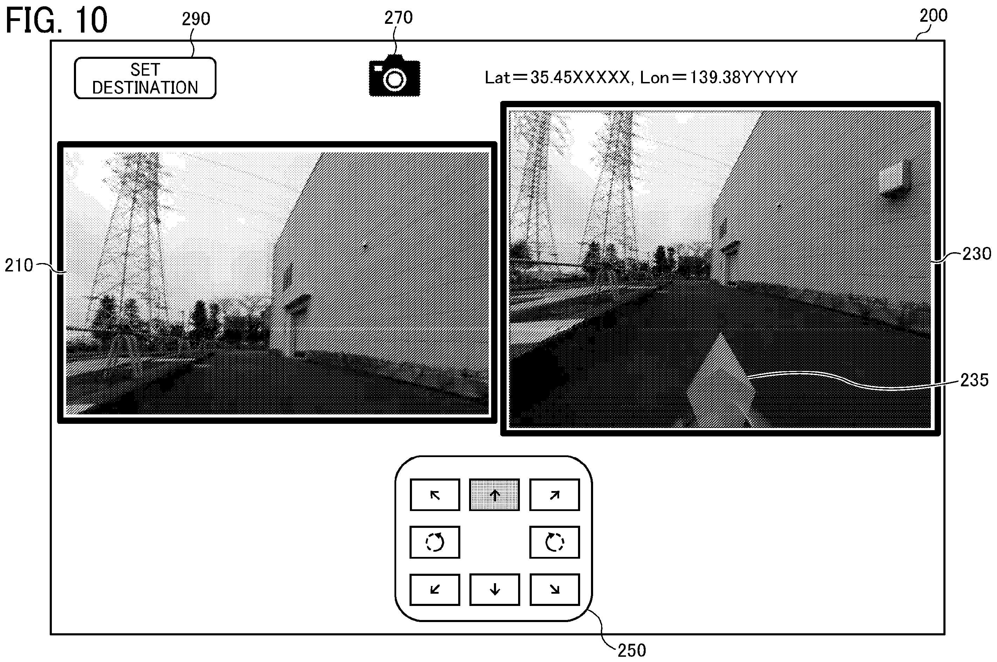

   FIG. 10 is a diagram illustrating an example of operation screen.
[FIG. 11]

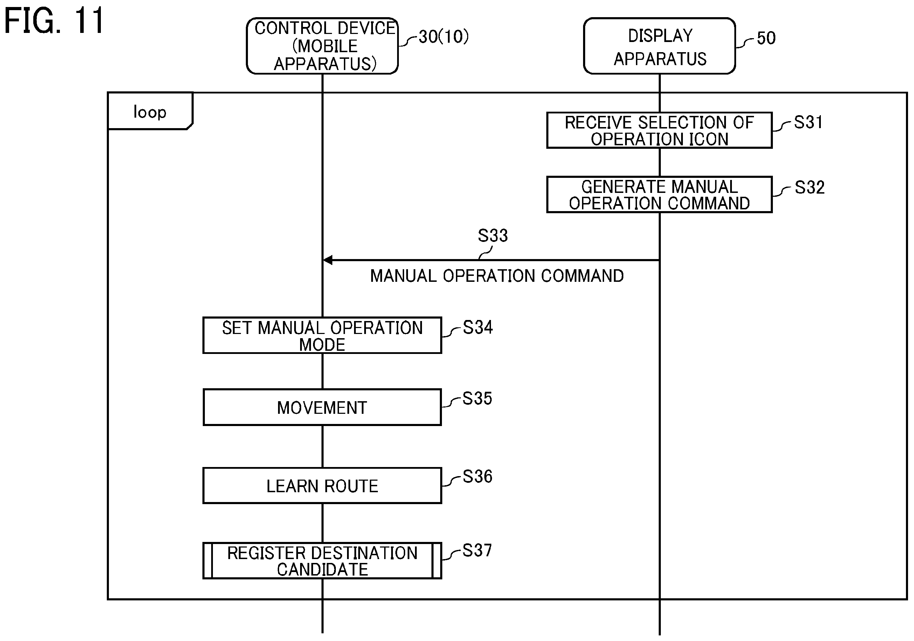

   FIG. 11 is a sequence diagram illustrating example processing of performing manual operation of the mobile apparatus, according to the embodiment.
[FIG. 12]

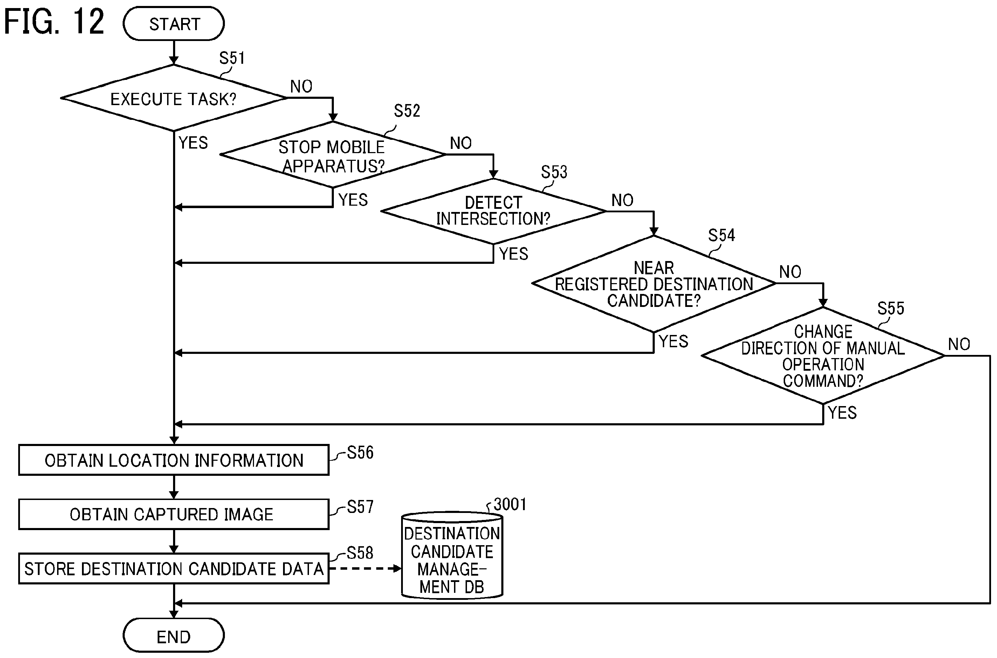

   FIG. 12 is a flowchart illustrating example processing of registering a destination candidate based on predetermined criteria of the mobile apparatus, according to the embodiment.
[FIG. 13]

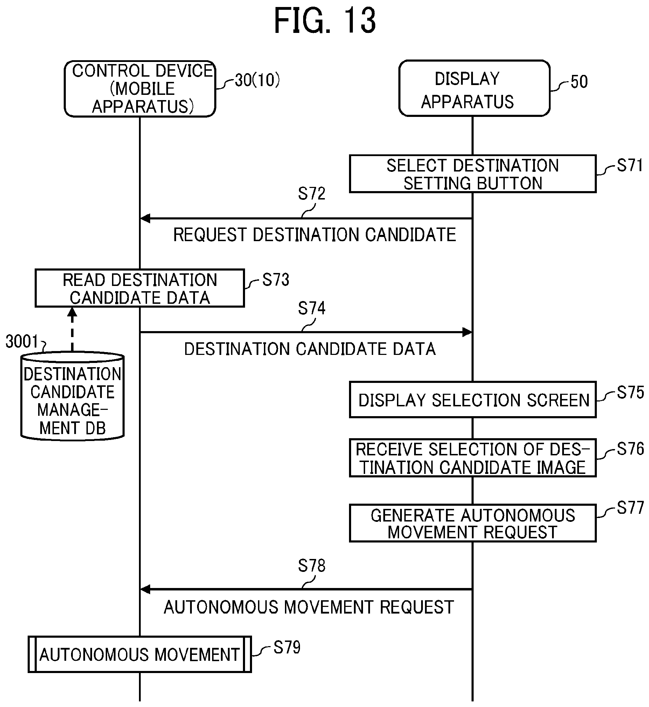

   FIG. 13 is a sequence diagram illustrating example processing of setting a destination of the mobile apparatus, according to the embodiment.
[FIG. 14]

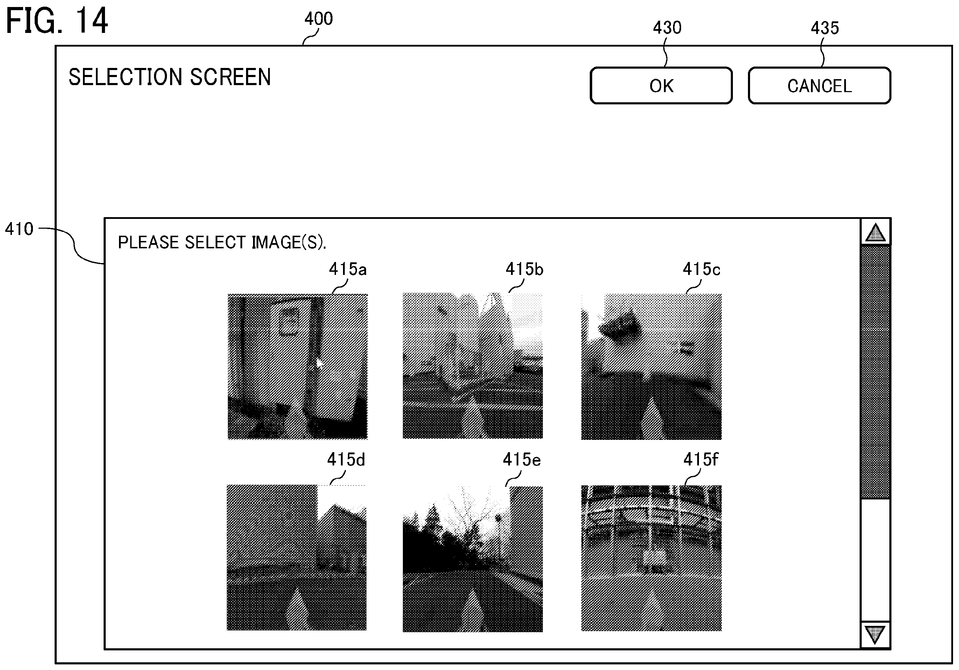

   FIG. 14 is a diagram illustrating an example of selection screen.
[FIG. 15]

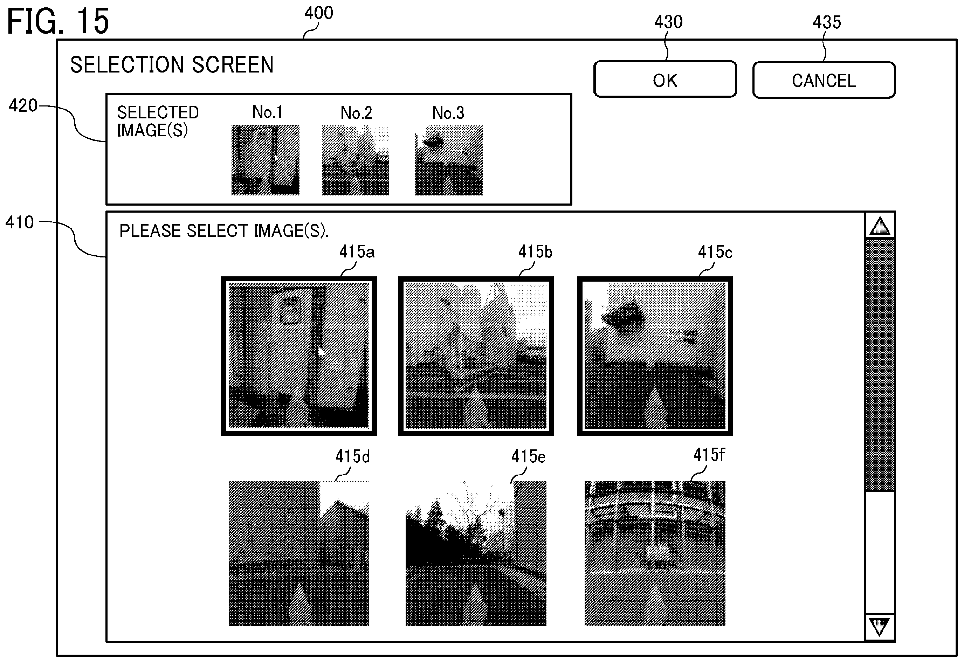

   FIG. 15 is a diagram illustrating another example of selection screen.
[FIG.16]

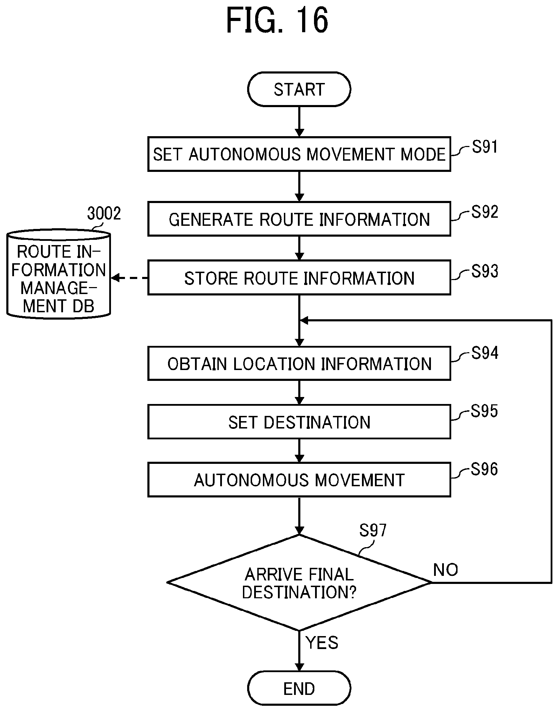

   FIG. 16 is a flowchart illustrating an example of autonomous movement processing performed by the mobile apparatus, according to the embodiment.
[FIG. 17]

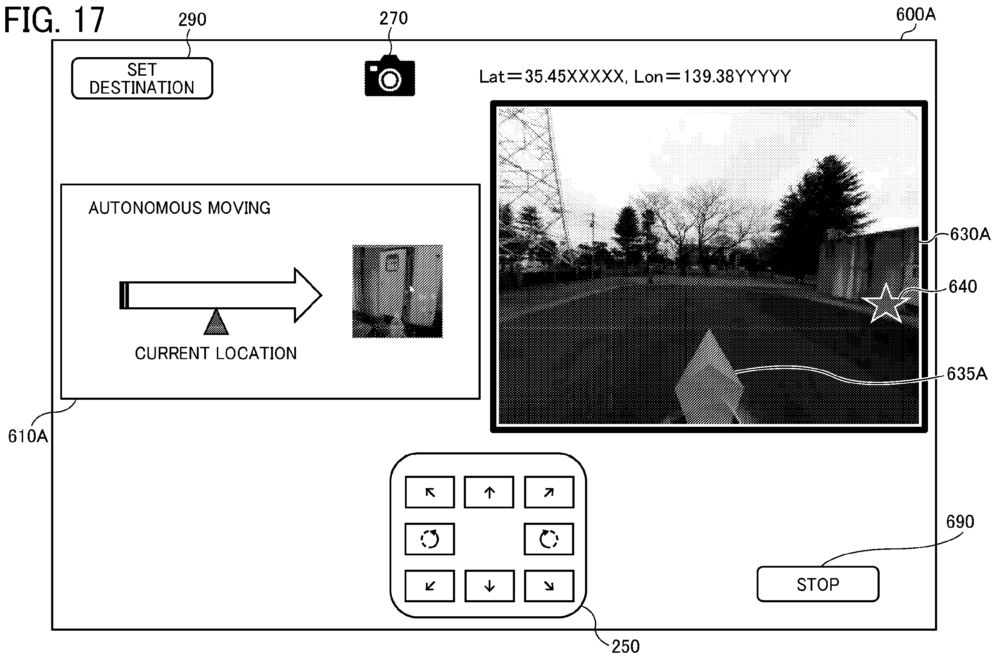

   FIG. 17 is a diagram illustrating an example of an operation screen when the mobile apparatus autonomously moves.
[FIG. 18]

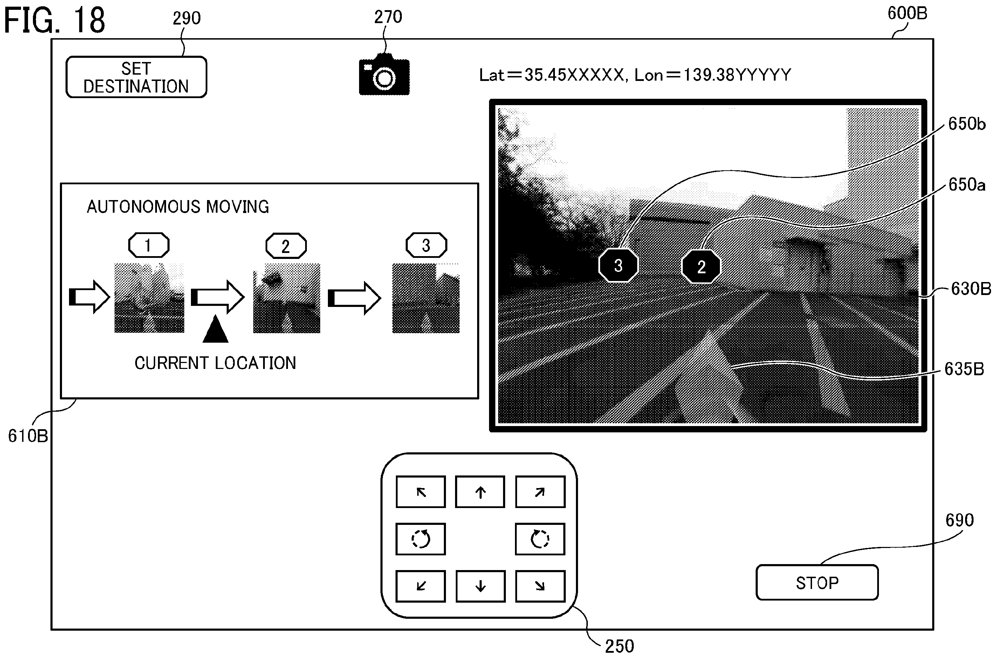

   FIG. 18 is a diagram illustrating an example of an operation screen.
[FIG. 19]

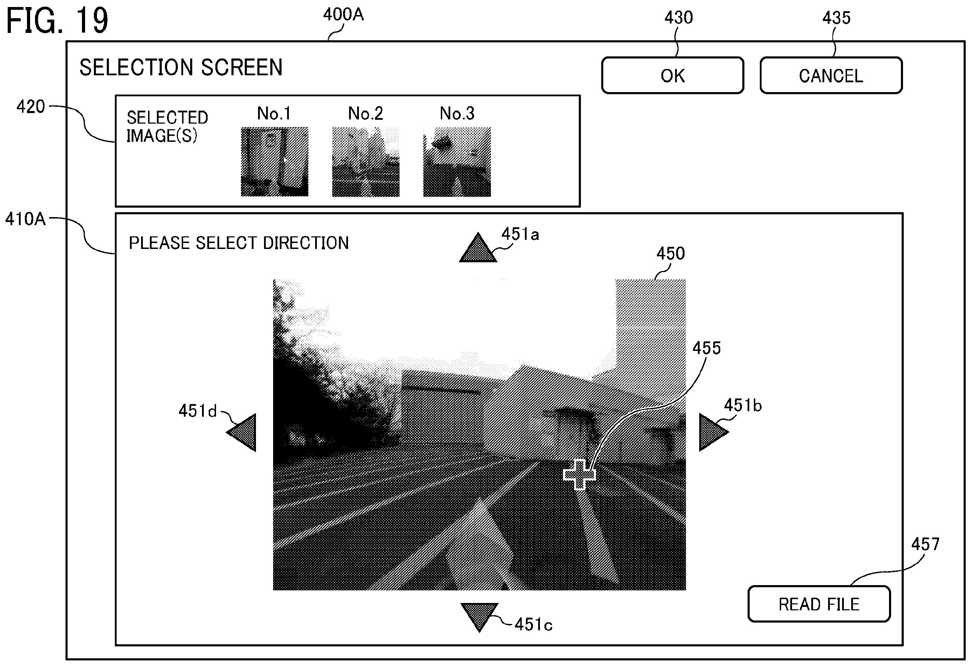

   FIG. 19 is a diagram illustrating a first modified example of the selection screen.
[FIG. 20]

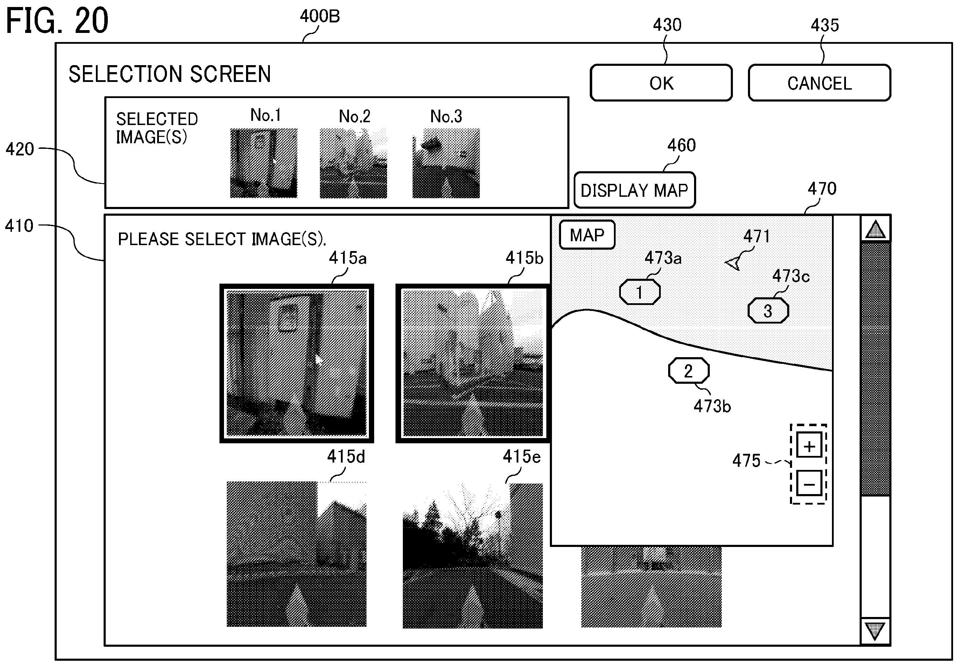

   FIG. 20 is a diagram illustrating a second modified example of the selection screen.
[FIG. 21]

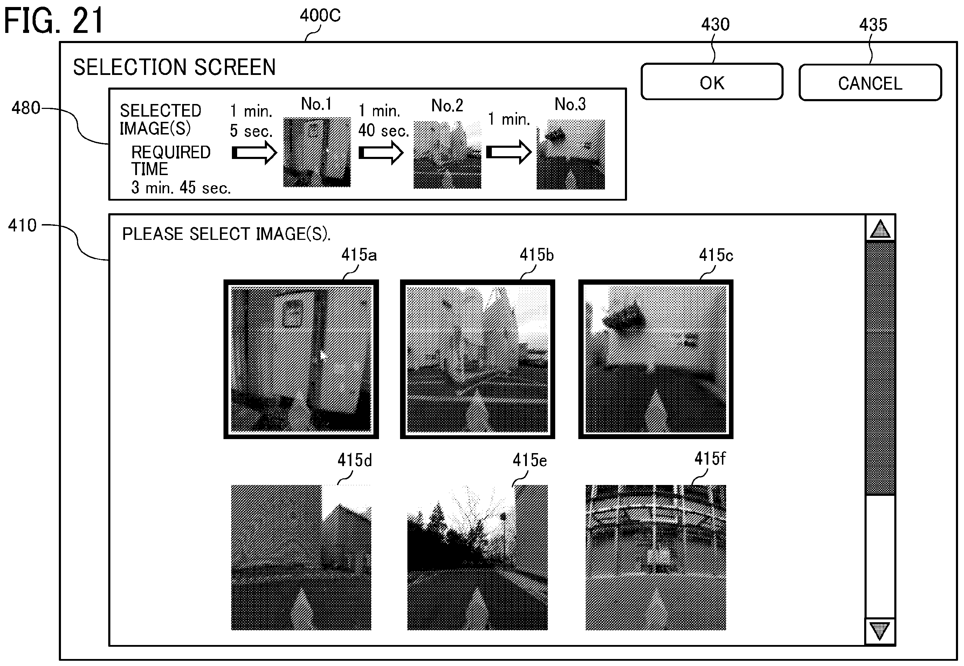

   FIG. 21 is a diagram illustrating a third modified example of the selection screen.
[FIG. 22]

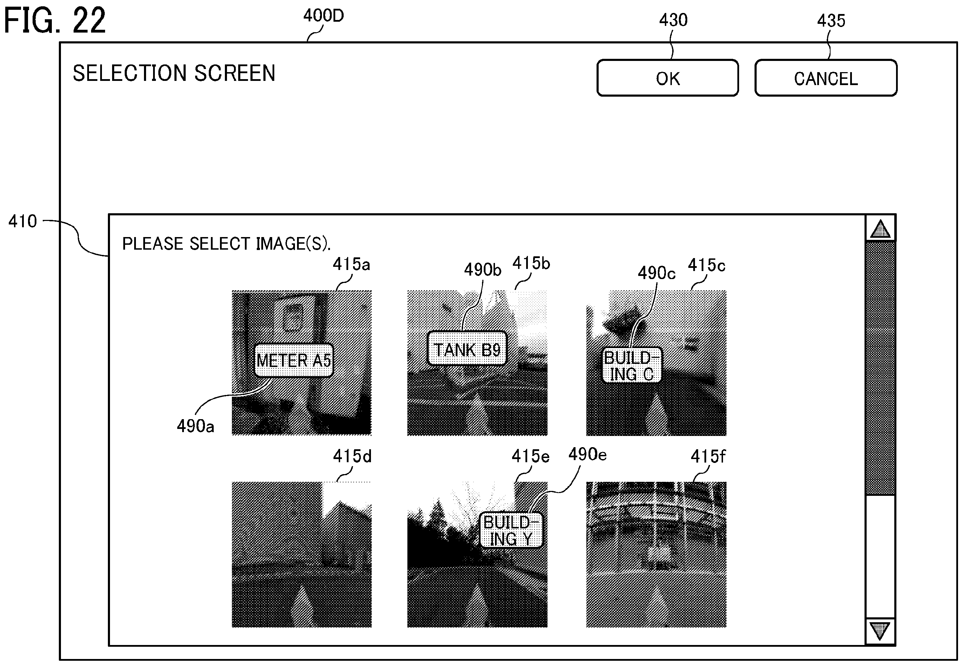

   FIG. 22 is a diagram illustrating a fourth modified example of the selection screen.
[FIG. 23]

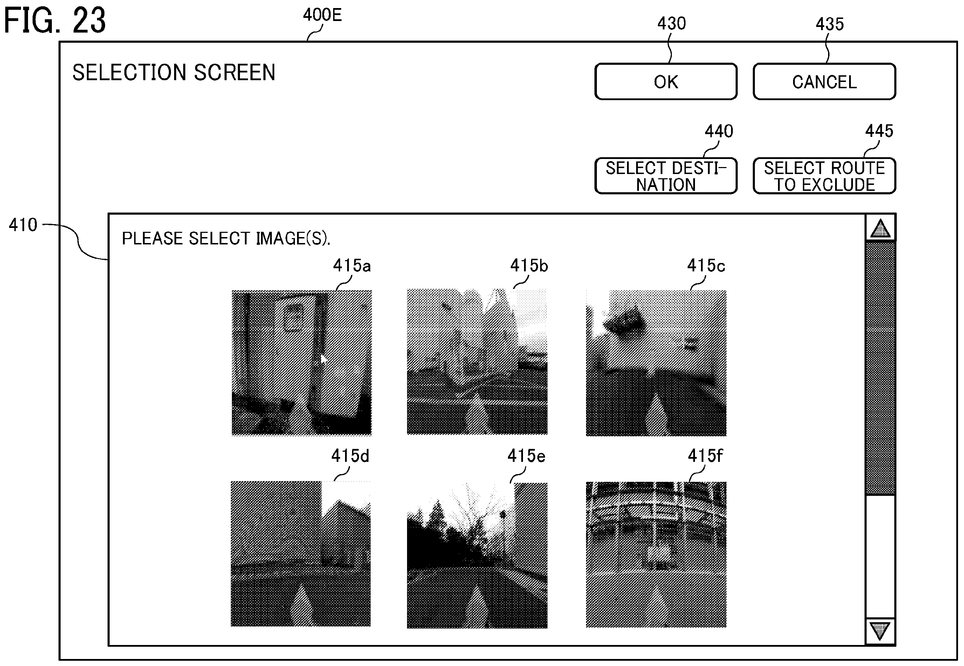

   FIG. 23 is a diagram illustrating a fifth modified example of the selection screen.
[FIG.24]

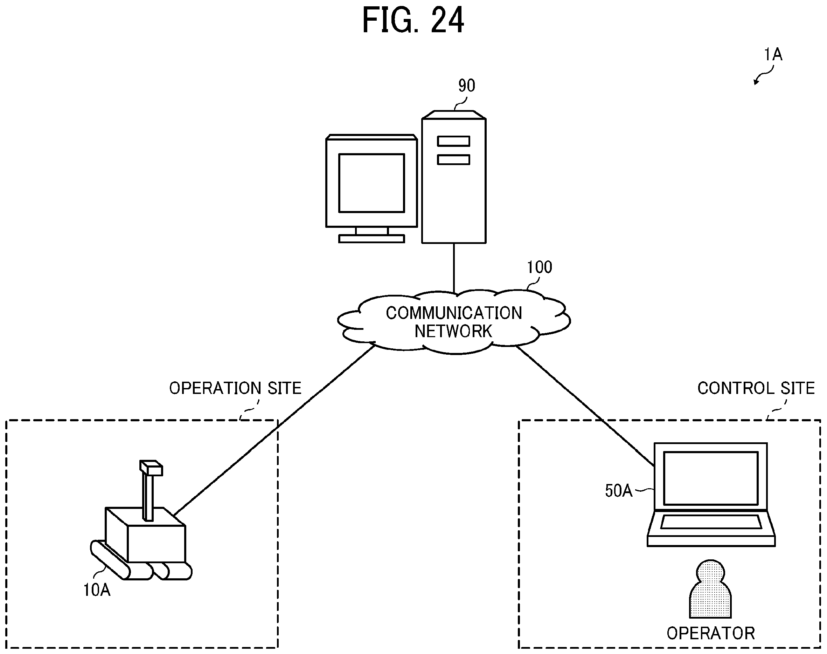

   FIG. 24 is a diagram illustrating an example of a general arrangement of a communication system according to a first variation of the embodiment.
[FIG. 25]

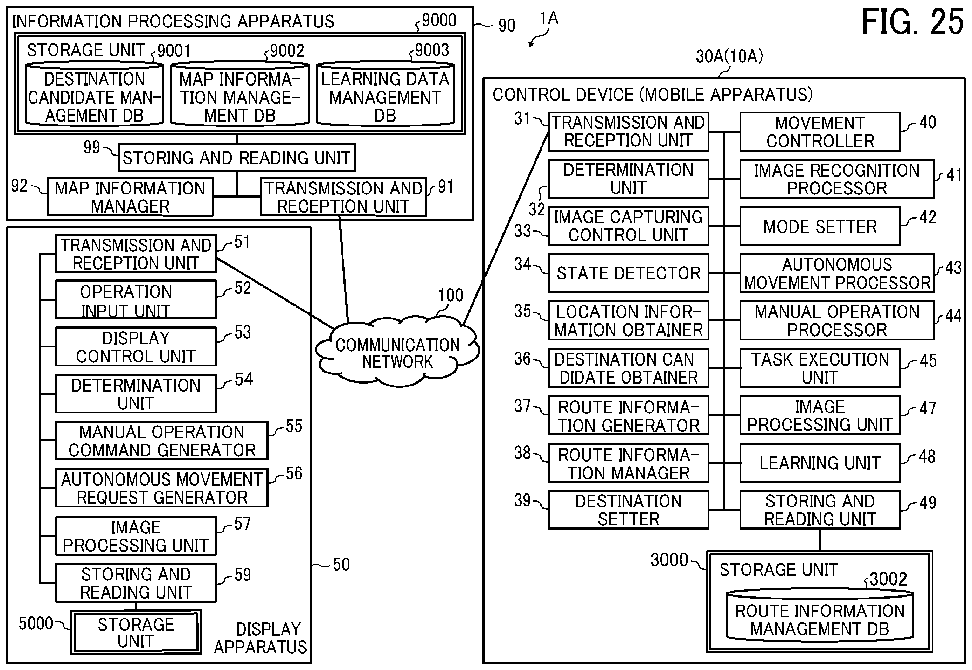

   FIG. 25 is a diagram illustrating an example of a functional configuration of the communication system according to the first variation of the embodiment.
[FIG. 26]

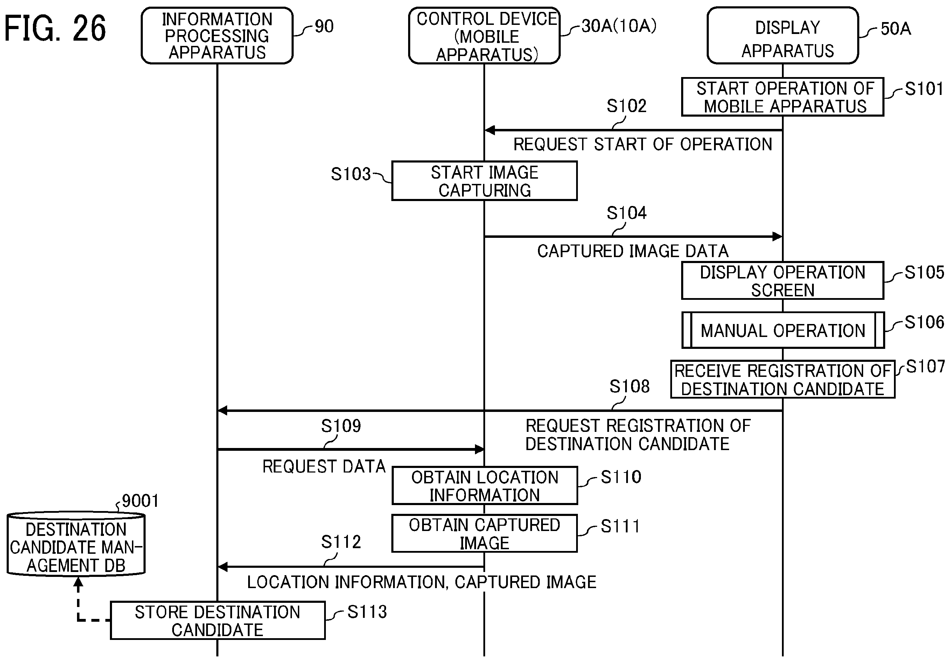

   FIG. 26 is a sequence diagram illustrating example processing of registering a destination candidate, according to the first variation of the embodiment.
[FIG. 27]

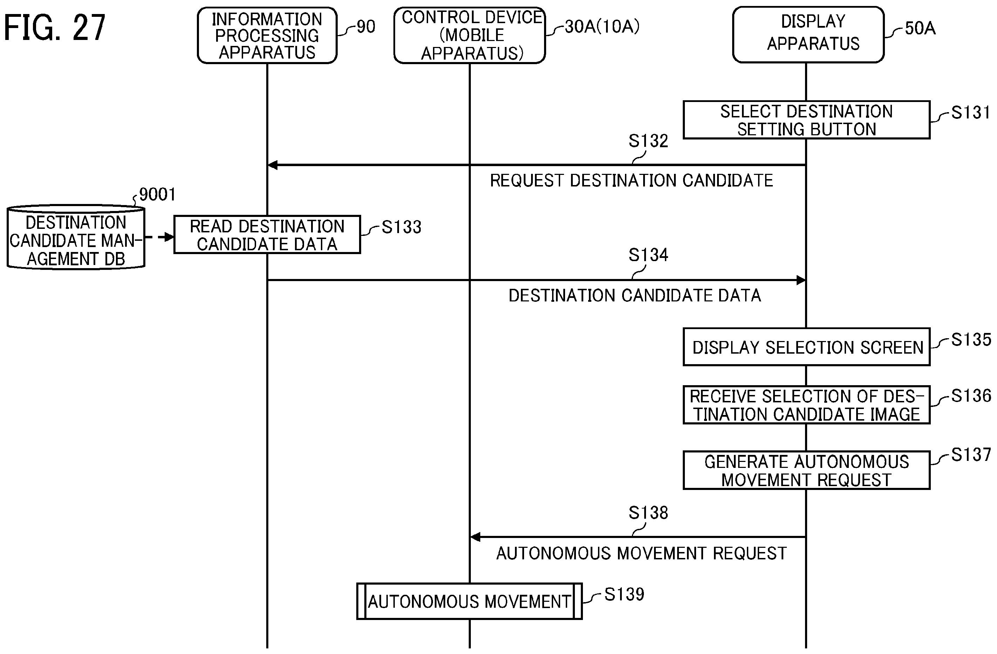

   FIG. 27 is a sequence diagram illustrating example processing of setting a destination of the mobile apparatus, according to the first variation of the embodiment.
[FIG. 28]

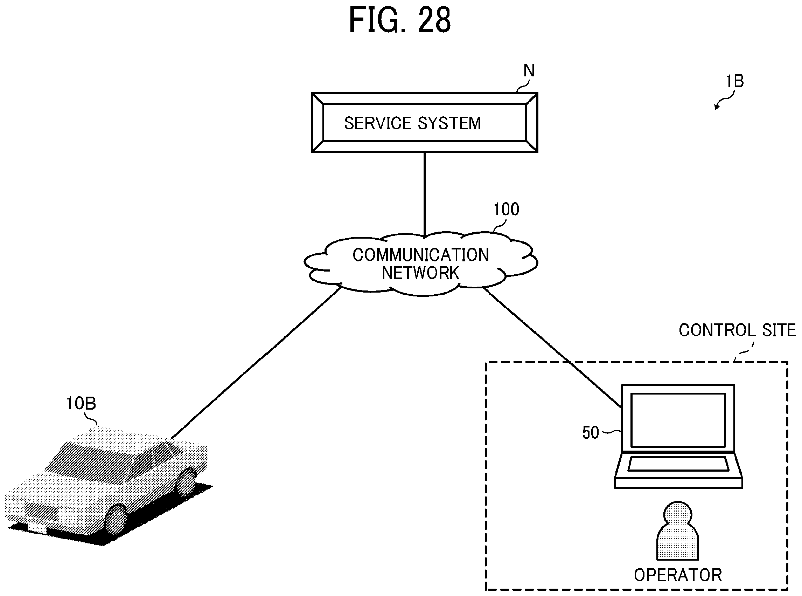

   FIG. 28 is a diagram illustrating an example of a general arrangement of a communication system according to a second variation of the embodiment.
[FIG. 29]

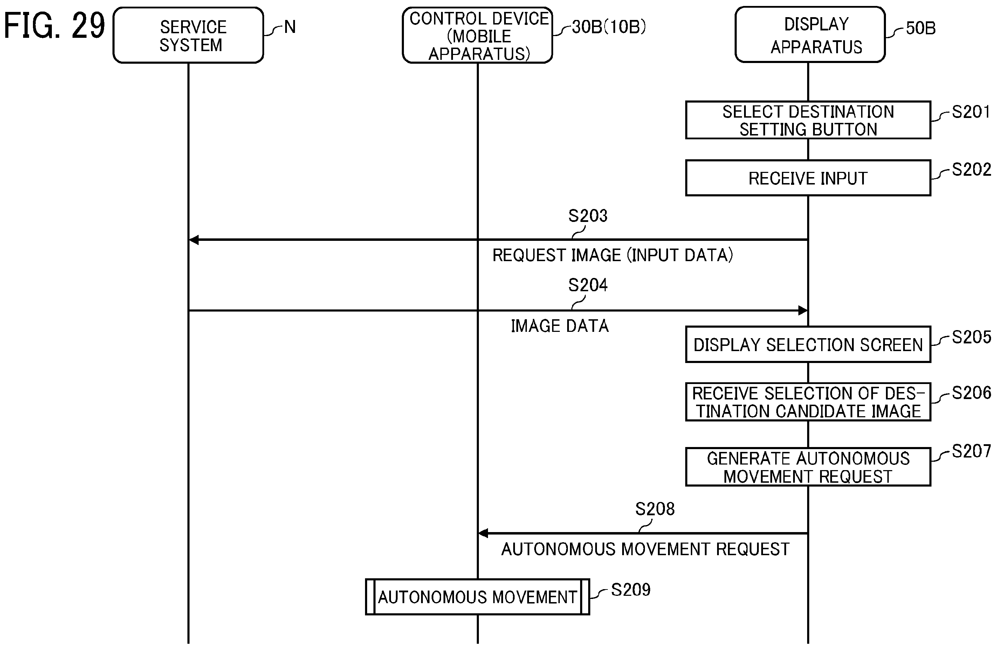

   FIG. 29 is a sequence diagram illustrating example processing of setting a destination of the mobile apparatus, according to the second variation of the embodiment.
[FIG. 30]

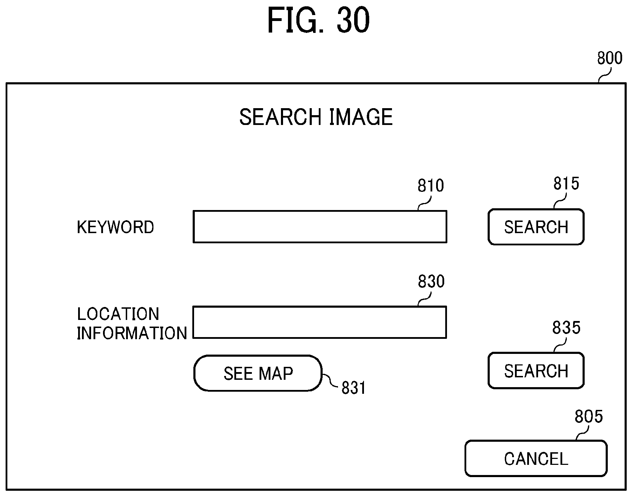

   FIG. 30 is a diagram illustrating an example of an image search screen, according to the second variation of the embodiment.
[FIG. 31]

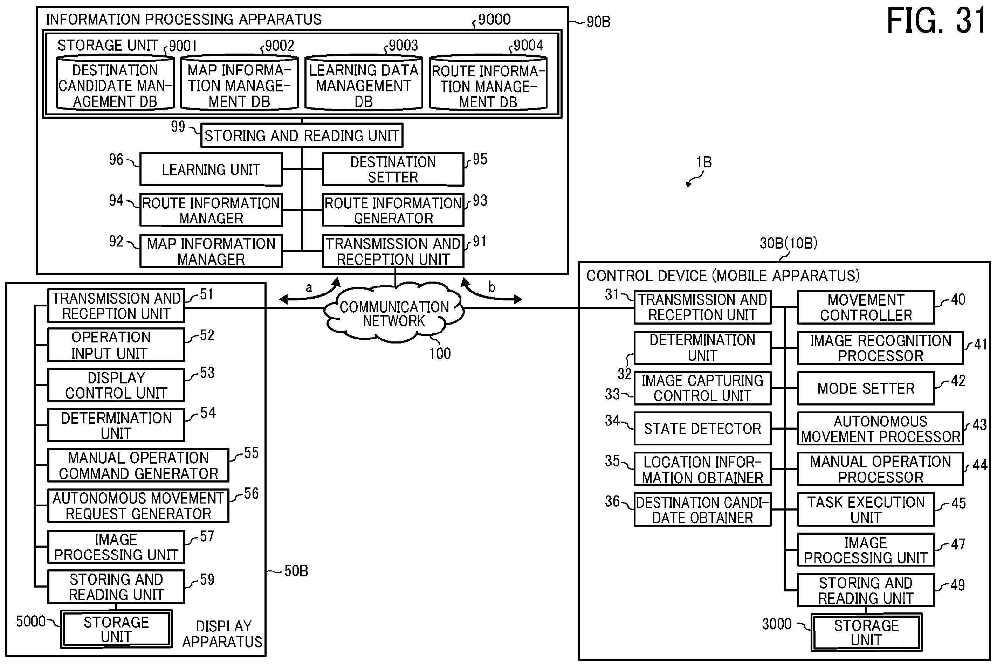

   FIG. 31 is a diagram illustrating an example of a functional configuration of the communication system of FIG. 28, according to the second variation of the embodiment.
[FIG. 32]

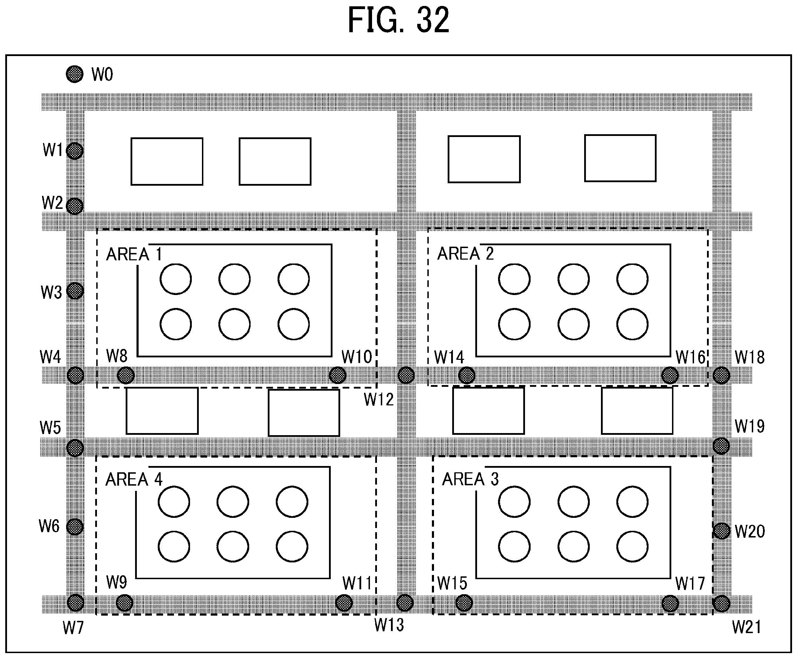

   FIG. 32 is a schematic diagram illustrating an example of a travel route of the mobile apparatus 10, according to the embodiment.
[FIG. 33]

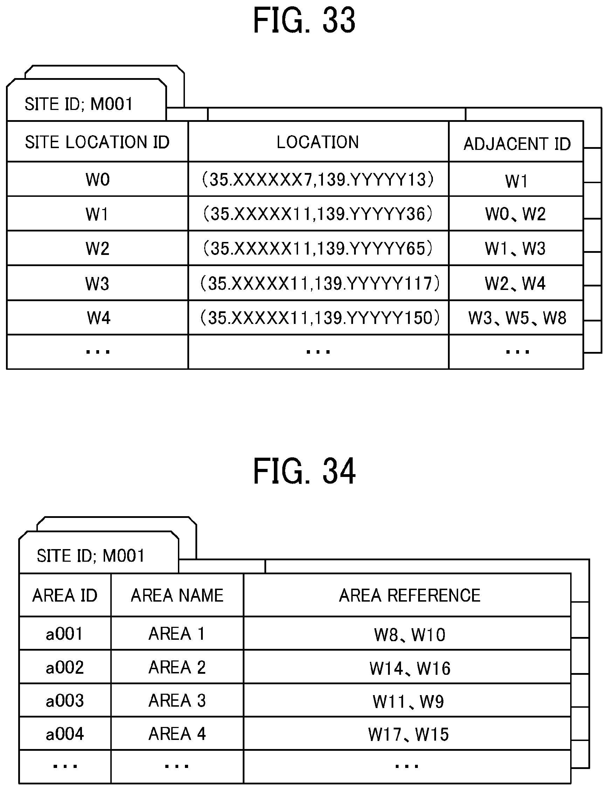

   FIG. 33 is a conceptual diagram illustrating an example of site location management table.
[FIG. 34]
   FIG. 34 is a conceptual diagram illustrating an example of area information management table.
[FIG. 35]

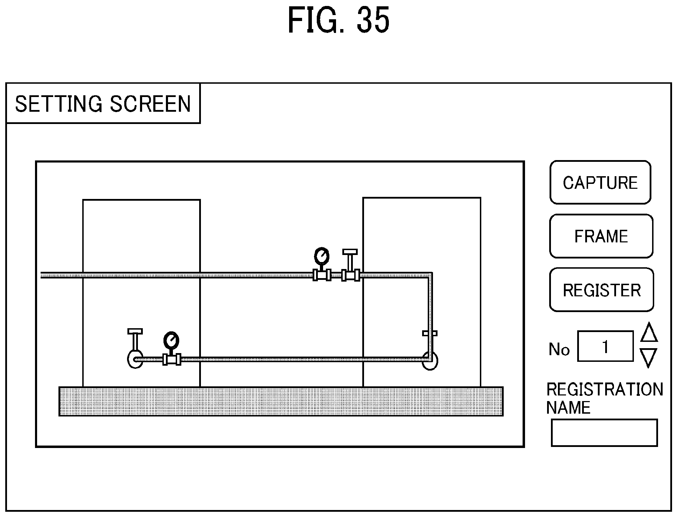

   FIG. 35 is a diagram illustrating an example of a setting screen.

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

### [Description of Embodiments]

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments of the present invention are described with reference to the drawings. In the description of the drawings, the same elements are denoted by the same reference numerals, and redundant descriptions thereof are omitted.

### System Configuration

FIG. 1 is a diagram illustrating an example of a general arrangement of a communication system 1 according to an embodiment. The communication system 1 illustrated in FIG. 1 is provided with a mobile apparatus 10, which is remotely operated by a user (also called operator) to travel from one location to another location at a certain site. The certain site where the mobile apparatus 10 is disposed may be referred to as an operation site.

Specifically, the communication system 1 includes the mobile apparatus 10 located at the operation site and a display apparatus 50. The mobile apparatus 10 and the display apparatus 50 in the communication system 1 are communicable with each other through a communication network 100. The communication network 100 is implemented by the Internet, mobile communication network, local area network (LAN), etc. The communication network 100 may include, in addition to a wired network, a wireless network in compliance with such as 3rd Generation (3G), 4th Generation (4G), 5th Generation (5G), Wireless Fidelity (Wi-Fi; Registered Trademark), Worldwide Interoperability for Microwave Access (WiMAX), Long Term Evolution (LTE), etc.

The mobile apparatus 10 is a robot, which is provided at the operation site and autonomously moves from one location to another location at the operation site. For example, the autonomous movement is operation of autonomously travelling the operation site, using a result of imitation learning (machine learning) of the past travel routes. The autonomous movement may be operation of autonomously travelling the operation site according to a travel route previously set, or operation of autonomously travelling the operation site using a technique such as line tracing. For simplicity, a mode in which the mobile apparatus 10 travels by autonomous movement is called the autonomous movement mode. Further, the mobile apparatus 10 may travel according to manual operation by a user at a remote location. For simplicity, a mode in which the mobile apparatus 10 travels by manual operation by the user is called the manual operation mode. For example, the mobile apparatus 10 is able to travel the operation site, while switching between the autonomous movement mode and the manual operation mode (manual operation by the user). The mobile apparatus 10 may execute a preset task such as inspection, maintenance, transportation, or light work, while travelling the operation site. In this disclosure, the mobile apparatus 10 is implemented by a robot, such as a robot that can operate while switching between the autonomous movement mode and the manual operation mode. Other examples of the mobile apparatus 10 include an automobile that can travel while switching between the automatic movement mode (automatic driving) and the manual operation mode (manual driving by user operation from a remote location). Further, the mobile apparatus 10 may be a flying object such as a drone, a multicopter, or an unmanned flying object.

The operation site where the mobile apparatus 10 is provided is, for example, an outdoor site such as a business site, a factory, a construction site, a substation, a farm, a field, an agricultural field, a cultivated land, or a disaster site, or an indoor site such as an office, a school, a factory, a warehouse, a commercial facility, a hospital, or a care facility. That is, the operation site may be any location where there is a need to cause the mobile apparatus 10 to perform a task that has been manually performed by a human.

The display apparatus 50 may be implemented by a computer such as a notebook personal computer (PC), operated by an operator (user), who is located at a control site different from the operation site, to perform predetermined operation with respect to the mobile apparatus 10. The operator instructs the mobile apparatus 10 to move or execute a predetermined task, via an operation screen displayed on the display apparatus 50 at the control site such as an office. For example, the operator remotely operates the mobile apparatus 10 while viewing an image of the operation site displayed at the display apparatus 50.

Although FIG. 1 illustrates an example in which one mobile apparatus 10 and one display apparatus 50 are connected to each other via the communication network 100, the display apparatus 50 may be connectable to a plurality of mobile apparatuses 10 located at one operation site or connectable to a plurality of mobile apparatuses 10 located at different operation sites. Further, although FIG. 1 illustrates an example case in which the display apparatus 50 is located at a control site remotely located from the operation site at which the mobile apparatus 10 is disposed, the display apparatus 50 may be located at the operation site at which the mobile apparatus 10 is disposed. Furthermore, the display apparatus 50 is not limited to a notebook PC, and may be, for example, a desktop PC, a tablet terminal, a smartphone, a wearable terminal, etc.

In case the operator registers a movement destination of the mobile apparatus that autonomously moves, the operator usually registers the movement destination using a character string representing a name of the movement destination, or location information of the movement destination. In some cases, it would be difficult for the operator to select a desired movement destination, such as a desired travel destination, using the registered character string. For example, a person who registers a candidate of the movement destination may be different from a person who selects the movement destination from candidates of the movement destination. In such case, the person who selects the movement destination does not know the registered character string for a desired movement destination.

In one of the following embodiments, when the mobile apparatus 10 is travelling, the image capturing device 12 mounted on the mobile apparatus 10 captures surroundings of the mobile apparatus 10 while acquiring location information of the mobile apparatus 10. The captured images are then registered as candidates of a movement destination, such as a travel destination, of the mobile apparatus 10. In the communication system 1, the display apparatus 50 displays the captured images, as candidates of movement destination, and allows the operator to select one or more movement destinations of the mobile apparatus 10 using the captured images that are displayed. With the above-described configuration of the communication system 1, operability for the user (operator) in selecting a movement destination of the mobile apparatus 10 improves.

In one example, the mobile apparatus 10 may control the image capturing device 12 to automatically capture surroundings of the mobile apparatus 10 based on a determination of whether at least one of predetermined criteria is satisfied. The predetermined criteria may be based on a movement state of the mobile apparatus 10.

### Configuration of Movable Apparatus

Next, referring to FIG. 2, a configuration of the mobile apparatus 10 is described in detail, according to the embodiment. FIG. 2 is a schematic diagram illustrating an example of a configuration of the mobile apparatus 10. The mobile apparatus 10 may have a hardware configuration, in which one or more elements are added to or deleted from the hardware elements illustrated in FIG. 2.

The mobile apparatus 10 illustrated in FIG. 2 includes a housing 11 including a control device 30 that controls processing or operation of the mobile apparatus 10, an image capturing device 12, a support 13, a display 14, a moving mechanism 15 (15a, 15b) that moves the mobile apparatus 10, and a swing arm 16 used by the mobile apparatus 10 to perform a preset task (operation). The control device 30 is accommodated in the housing 11, which is located at a body section of the mobile apparatus 10, and controls processing or operation of the mobile apparatus 10.

The image capturing device 12 captures images of an object to be captured, such as a person, any physical item, or a landscape at the operation site where the mobile apparatus 10 is disposed, to obtain captured images. The image capturing device 12 may be a digital camera (general imaging device) capable of acquiring a planar image, such as a digital single-lens reflex camera or a compact digital camera. In another example, the image capturing device 12 may be a special image capturing device capable of acquiring a special image, such as an omnidirectional (360-degree) panoramic image, which may be referred to as a spherical image. The special image capturing device is, for example, a spherical image capturing device that captures an image of an object to obtain two hemispherical images, and generates a spherical image based on the hemispherical images. Alternatively, the special image capturing device may be a wide-angle view camera or a stereo camera capable of acquiring a wide-angle view image (panoramic image) having an angle of view equal to or greater than a predetermined value (for example, 60 degrees). Alternatively, the special image capturing device may be an image capturing device capable of capturing an object to acquire a hemispherical image. That is, the special image capturing device is capable of capturing an image using a lens having a focal length shorter than a predetermined value (for example, 50mm). In this disclosure, the special image capturing device is an example of an image capturing device that captures the operation site in all directions to acquire a special image (that is, spherical image) of the operation site. In alternative to capturing the spherical image with one special image capturing device, more than one special image capturing device may be provided. In yet another example, one or more general image capturing devices may be provided so as to function as the special image capturing device. For example, the image capturing device captures a plurality of planar images at one location, while being rotated so as to cover all directions of the operation site. The captured images are then synthesized to generate a spherical image. In generating the spherical image, that is, the special image, a plurality of captured images are stitched by image processing.

The mobile apparatus 10 may include a plurality of image capturing devices 12. In such case, the mobile apparatus 10 may include, as the image capturing device 12, both a special image capturing device that captures an image of a part of the site in all directions to obtain a spherical image, and a general image capturing device that captures a part of an object to obtain a planar image. It is assumed that the object captured with the general image capturing device is included in the spherical image captured with the special image capturing device. In the following description, it is assumed that the mobile apparatus 10 includes both the special image capturing device 12a and the general image capturing device 12b, as the image capturing device 12. The captured image acquired by the image capturing device 12 may be a video image or a still image, or may be both a video image and a still image. The captured image obtained by the image capturing device 12 may be stored in association with audio data, which may be obtained by a microphone 307a.

The support 13 is any structure that secures the image capturing device 12 on the mobile apparatus 10 (housing 11). The support 13 may be a pole or a base attached to the housing 11. The support 13 may be movable, so as to adjust the imaging direction (orientation) and position (height) of the image capturing device 12.

The moving mechanism 15 is a unit that causes the mobile apparatus 10 to move, and includes wheels, a traveling motor, a traveling encoder, a steering motor, a steering encoder, etc. Since movement of the mobile apparatus 10 can be controlled using any known method, detailed description thereof will be omitted. For example, the mobile apparatus 10 receives an instruction to travel from the operator (the display apparatus 50), and the movement mechanism 15 moves the mobile apparatus 10 according to the received instruction. The moving mechanism 15 may be of a bipedal type or a single-wheel type. In this disclosure, the design of the mobile apparatus 10 is not limited to the one illustrated in FIG. 2, which is similar to that of a vehicle. The mobile apparatus 10 may be designed to be, for example, a bipedal walking robot that mimics human-being, a robot that mimics any living creature, or a robot that mimics a specific character.

The swing arm 16 is provided with an operation unit, which enables the mobile apparats 10 to carry out operation other than movement. Specifically, as illustrated in FIG. 2, the swing arm 16 is provided with a hand for grasping an object such as a component, at the distal end of the swing arm 16, as the operation unit. The mobile apparatus 10 performs a preset task (operation) by rotating or changing a form of the swing arm 16. In addition to the above-described configuration, the mobile apparatus 10 may include various sensors capable of obtaining detection results of surroundings of the mobile apparatus 10. Examples of various sensors include a barometer, a thermometer, a photometer, a motion sensor, a gas sensor, an odor sensor, and an illuminometer.

### Hardware Configuration

Referring next to FIGs. 3 and 4, a hardware configuration of an apparatus or a terminal included in the communication system of FIG. 1 is described according to the embodiment. The apparatus or terminal may have a hardware configuration, in which one or more elements are added to or deleted from the hardware elements illustrated in FIG. 3 or 4.

### Hardware Configuration of Mobile Apparatus

FIG. 3 is a diagram illustrating an example of a hardware configuration of the mobile apparatus 10. The mobile apparatus 10 includes the control device 30 that controls processing or operation of the mobile apparatus 10. As described above, the control device 30 is incorporated in the housing 11 of the mobile apparatus 10. The control device 30 may be provided outside the housing 11 of the mobile apparatus 10, or may be provided as a device separate from the mobile apparatus 10.

The control device 30 includes a central processing unit (CPU) 301, a read only memory (ROM) 302, a random access memory (RAM) 303, a hard disk drive (HDD) 304, a medium interface (I/F) 305, an input/output I/F 306, an audio input/output (I/O) I/F 307, a network I/F 308, a short-range communication circuit 309, an antenna 309a for the short-range communication circuit 309, an external device connection I/F 311, and a bus line 310.

The CPU 301 controls entire operation of the mobile apparatus 10. The CPU 301 is a processor that loads a program or data stored in the ROM 302, a hard disk (HD) 304a, etc. onto the RAM 303, to execute processing to achieve functions of the mobile apparatus 10.

The ROM 302 is a nonvolatile memory that keeps storing a program or data even after the power is turned off. The RAM 303 is a volatile memory used as a work area for the CPU 301. The HDD 304 controls reading or writing of various types of data from or to the HD 304a under control of the CPU 301. The HD 304a stores various types of data such as programs. The medium I/F 305 controls reading or writing (storing) of data from or to a recording medium 305a such as a universal serial bus (USB) memory, a memory card, an optical disc, or a flash memory.

The input/output I/F 306 is an interface for inputting and outputting characters, numerals, various instructions, etc. to and from various external devices. The input/output I/F 306 controls display of various types of information such as a cursor, a menu, a window, text, or an image on a display 14 such as a liquid crystal display (LCD). In one example, the display 14 is a touch panel display provided with an input device (input means). In addition to the display 14, input means such as a mouse and a keyboard may be connected to the input/output I/F 306. The audio I/O I/F 307 is a circuit that processes input and output of sound signals between the microphone 307a and a speaker 307b under control of the CPU 301. The microphone 307a is an example of built-in sound collecting means for inputting a sound signal under control of the CPU 301. The speaker 307b is an example of reproducing means for outputting a sound signal under control of the CPU 301.

The network I/F 308 is a communication interface that enables communication (connection) with other devices or apparatuses via the communication network 100. The network I/F 308 is, for example, a communication interface used for communication via such as a wired or wireless local area network (LAN). The short-range communication circuit 309 is a communication circuit in compliance with such as Near Field communication (NFC) or BLUETOOTH. The external device connection I/F 311 is an interface for connecting other devices to the control device 30.

The bus line 310 is an address bus or a data bus, which electrically connects the above-described elements, to allow exchange of an address signal, a data signal, or various control signals. The CPU 301, ROM 302, RAM 303, HDD 304, medium I/F 305, input/output I/F 306, audio I/O I/F 307, network I/F308, short-range communication circuit 309, and external device connection I/F311 are connected to each other via the bus line 310.

The control device 30 is further connected with a drive motor 101, an actuator 102, an acceleration and orientation sensor 103, a global positioning system (GPS) sensor 104, a special image capturing device 12a, a general image capturing device 12b, a battery 120, and an obstacle detection sensor (detection sensor) 106 via the external device connection I/F 311.

The drive motor 101 rotationally drives the moving mechanism 15 to move the mobile apparatus 10 along a surface according to instructions from the CPU 301. The actuator 102 changes a form of the swing arm 16 according to instructions from the CPU 301. Examples of the acceleration and orientation sensor 103 include an electromagnetic compass for detecting geomagnetism, gyrocompass, and an acceleration sensor. The GPS sensor 104 receives a GPS signal from a GPS satellite. The battery 120 is a unit that supplies electric power to the entire mobile apparatus 10. Examples of the battery 120 include a battery built in the mobile apparatus 10, and an external battery as an auxiliary power supply. The obstacle detection sensor 106 is a detection sensor that detects an obstacle that may be present in the surroundings of the mobile apparatus 10 that is moving. Examples of the obstacle detection sensor 106 include, but not limited to, a stereo camera, an image sensor such as a camera equipped with an area sensor in which photoelectric conversion elements are arranged in matrix, and a ranging sensor. The ranging sensor may be a time of flight (TOF) sensor, a light detection and ranging (LIDAR) sensor, a radar sensor, a laser range finder, an ultrasonic sensor, a depth camera, or a depth sensor.

### Hardware Configuration of Display Apparatus

FIG. 4 is a diagram illustrating an example of a hardware configuration of the display apparatus 50. Each hardware element of the display apparatus 50 is denoted by a reference numeral in 500 series. The display apparatus 50 is implemented by a computer and includes, as illustrated in FIG. 4, a CPU 501, ROM 502, RAM 503, HD 504, HDD controller 505, display 506, external device connection I/F 507, network I/F 508, bus line 510, keyboard 511, pointing device 512, audio I/O I/F 513, microphone 514, speaker 515, camera 516, digital versatile disk rewritable DVD-RW (DVD-RW) drive 517, and medium I/F 519.

The CPU 501 controls entire operation of the display apparatus 50. The ROM 502 stores a program such as an initial program loader (IPL) used for executing the CPU 501. The RAM 503 is used as a work area for the CPU 501. The HD 504 stores various data such as a program. The HDD controller 505 controls reading or writing of various data to or from the HD 504 under control of the CPU 501. The display 506 displays various information such as a cursor, menu, window, characters, or image. In one example, the display 506 is a touch panel display provided with an input device (input means). The display 506 is an example of display means. The display 506 may be an external device having a function of displaying, which is connected to the display apparatus 50. Example of the display 506 include, but not limited to, an external display such as an interactive white board (IWB) as an electronic whiteboard, and a projection surface on which an image from the projector or a head-up display (HUD), which may be externally connected, is projected. The projection surface may be a ceiling or a wall of a site to be controlled, or a windshield of an automobile. The external device connection I/F 507 is an interface for connecting various external devices. The network I/F 508 is an interface for data transmission using the communication network 100. The bus line 510 is an address bus, a data bus or the like, which electrically connects the elements illustrated in FIG. 4 such as the CPU 501.

The keyboard 511 is an example of an input device (inputting means) including a plurality of keys for inputting characters, numerical values, various instructions, and the like. The pointing device 512 is an example of an input device that allows a user to select or execute a specific instruction, select a target for processing, or move a cursor being displayed. The input device is not limited to the keyboard 511 and the pointing device 512, and may be a touch panel, a voice input device, or the like. The audio I/O I/F 513 is a circuit for inputting or outputting an audio signal to the microphone 514 or from the speaker 515 under control of the CPU 501. The microphone 514 is an example of audio collecting device, which is a built-in type, capable of inputting audio under control of the CPU 501. The speaker 515 is an example of built-in output device that outputs an audio signal. The camera 516 is an example of built-in imaging device capable of capturing a target to obtain captured image data. The microphone 514, the speaker 515, and the camera 516 may be external devices in alternative of being built in the display apparatus 50. The DVD-RW drive 517 reads and writes various data from and to a DVD-RW 518, which is an example of a removable recording medium. In alternative to the DVD-RW, any removable recording medium may be used such as a DVD-R, Blu-ray Disc (Registered Trademark), etc. The medium I/F 519 controls reading or writing (storing) of data with respect to a recording medium 521 such as a flash memory.

Further, any one of the above-described control programs may be recorded in a file in a format installable or executable on a computer-readable recording medium for distribution. Examples of the recording medium include a compact disc recordable (CD-R), a digital versatile disk (DVD), a Blu-ray Disc, an SD card, and a USB memory. In addition, such recording medium may be provided in the form of a program product to users within a certain country or outside that country. For example, the display apparatus 50 executes the control program to implement processing to control display according to the present disclosure.

### Functional Configuration

Next, referring to FIGs. 5 to 8, a functional configuration of the communication system 1 is described according to the embodiment. FIG. 5 is a diagram illustrating an example of a functional configuration of the communication system 1. FIG. 5 illustrates a part of devices and terminals of FIG. 1, which are related to processing or operation to be described below.

### Functional Configuration of Mobile Apparatus (Control Device)

First, referring to FIG. 5, a functional configuration of the control device 30 that controls processing or operation of the mobile apparatus 10 is described according to the embodiment. The control device 30 includes a transmission and reception unit 31, a determination unit 32, an image capturing control unit 33, a state detector 34, a location information obtainer 35, a destination candidate obtainer 36, a route information generator 37, a route information manager 38, a destination setter 39, a movement controller 40, an image recognition processor 41, a mode setter 42, an autonomous movement processor 43, a manual operation processor 44, a task execution unit 45, a map information manager 46, an image processing unit 47, a learning unit 48, and a storing and reading unit 49. These units are functions implemented by or caused to function by operating any of the hardware elements illustrated in FIG. 3 in cooperation with the instructions of the CPU 301 according to the control device program expanded from the HD 304a to the RAM 303. Further, the control device 30 includes a storage unit 3000 implemented by the ROM 302, HD 304a, or recording medium 305a, illustrated in FIG. 3.

The transmission and reception unit 31, which is implemented by the network I/F 308 that operates according to instructions of the CPU 301, transmits or receives various data or information to or from other device or terminal through the communication network 100.

The determination unit 32, which is implemented by instructions of the CPU 301, performs various determinations. The image capturing control unit 33, which is implemented mainly by the instructions of the CPU 301 output via the external device connection I/F 311, controls image capturing processing of the image capturing device 12. For example, the image capturing control unit 33 instructs the special image capturing device 12a and the general image capturing device 12b to perform image capturing. The image capturing control unit 33 acquires, for example, captured images obtained through image capturing performed by the special image capturing device 12a and the general image capturing device 12b.

The state detector 34, which is implemented mainly by the instructions of the CPU 301 output via the external device connection I/F 311, detects the state of the mobile apparatus 10 or the surroundings of the mobile apparatus 10 using various sensors. For example, the state detector 34 measures a distance to an object (obstacle) present around the mobile apparatus 10 using, for example, the obstacle detection sensor 106, and outputs the measured distance as distance data. The state detector 34 may further acquire data indicating a location of the mobile apparatus 10 based on a match with an environment map, by applying simultaneous localization and mapping (SLAM) using the distance data measured with the obstacle detection sensor 106. Here, SLAM is a technique that allows simultaneous processing of self-position estimation and environment map creation. The state detector 34 further detects the direction to which the mobile apparatus 10 is heading or faces using, for example, the acceleration and orientation sensor 103.

The location information obtainer 35, which is implemented by the instructions of the CPU 301 output via the external device connection I/F 311, acquires location information indicating the current location of the mobile apparatus 10 using the GPS sensor 104. For example, the location information obtainer 35 acquires coordinate information indicating the latitude and longitude of the current location of the mobile apparatus 10 using the GPS sensor 104.

The destination candidate obtainer 36, which is implemented mainly by the instructions of the CPU 301, acquires an image of a destination candidate, which indicates a candidate of movement destination of the mobile apparatus 10. Specifically, the destination candidate obtainer 36 acquires, as an image of destination candidate, a captured image that is captured by the image capturing control unit 33. For example, the captured image is an image of a part of the site where the mobile apparatus 10 is disposed.

The route information generator 37, which is implemented mainly by the instructions of the CPU 301, generates route information indicating a travel route of the mobile apparatus 10. The route information generator 37 generates route information indicating a route from the current location to the final destination (that is, travel destination), based on the location of the destination candidate selected by the operator of the mobile apparatus 10. Example methods of generating the route information include a method of connecting the waypoints from the current location to the final destination with a straight line, and a method of minimizing the travel time by avoiding an obstacle using a captured image or information of the obstacle obtained by the state detector 34.

The route information manager 38, which is implemented by the instructions of the CPU 301, stores the route information generated by the route information generator 37 in the route information management DB 3002, for management.

The destination setter 39, which is implemented mainly by the instructions of the CPU 301, sets a movement destination of the mobile apparatus 10. For example, based on the current location of the mobile apparatus 10 acquired by the location information obtainer 35 and the route information generated by the route information generator 37, the destination setter 39 sets one of destination candidates selected by the operator of the mobile apparatus 10, as a movement destination that the mobile apparatus 10 is currently heading.

The movement controller 40, which is implemented mainly by the instructions of the CPU 301 to the external device connection I/F 311, controls movement of the mobile apparatus 10 by driving the moving mechanism 15. For example, the movement controller 40 moves the mobile apparatus 10 in response to an instruction to drive from the autonomous movement processor 43 or the manual operation processor 44.

The image recognition processor 41, which is implemented mainly by the instructions of the CPU 301, performs image recognition on a captured image acquired by the image capturing control unit 33. For example, the image recognition processor 41 performs image recognition to determine whether or not a specific object is captured in the acquired captured image. The specific object is, for example, an obstacle on or around the travel route of the mobile apparatus 10, an intersection such as a crossroad or an L-shaped road, or a sign or a signal at the site.

The mode setter 42, which is implemented mainly by the instructions of the CPU 301, sets an operation mode indicating an operation of movement of the mobile apparatus 10. The mode setter 42 sets either the autonomous movement mode in which the mobile apparatus 10 autonomously moves, or the manual operation mode in which the mobile apparatus 10 moves according to manual operation of the operator.

The autonomous movement processor 43, which is implemented mainly by the instructions of the CPU 301, controls autonomous movement of the mobile apparatus 10. For example, the autonomous movement processor 43 outputs an instruction for driving the mobile apparatus 10 to the movement controller 40, such that the mobile apparatus 10 travels through the travel route indicated by the route information generated by the route information generator 37.

The manual operation processor 44, which is mainly implemented by the instructions of the CPU 301, controls manual operation of the mobile apparatus 10. For example, the manual operation processor 44 outputs an instruction for driving the mobile apparatus 10 to the movement controller 40 in response to a manual operation instruction transmitted from the display apparatus 50.

The task execution unit 45, which is implemented mainly by the instructions of the CPU 301, causes the mobile apparatus 10 to execute a preset task in response to a request from the operator. In this disclosure, examples of the preset task executed by the task execution unit 45 include processing of capturing images for inspection of a facility at the site, and performing light work using the swing arm 16.

The map information manager 46, which is implemented mainly by the instructions of the CPU 301, manages map information such as an environment map of the operation site where the mobile apparatus 10 is disposed, which is stored in a map information management DB 3003. For example, the map information manager 46 manages map information such as the environment map, downloaded from an external server or created by applying SLAM.

The image processing unit 47, which is implemented mainly by the instructions of the CPU 301, generates a display image to be displayed on the display apparatus 50. For example, the image processing unit 47 generates a display image to be displayed on the display apparatus 50, by applying processing to the captured image acquired by the image capturing control unit 33.

The learning unit 48, which is implemented mainly by the instructions of the CPU 301, learns travel routes to be used for autonomous movement of the mobile apparatus 10. For example, the learning unit 48 performs imitation learning (machine learning) on the travel routes to be used for autonomous movement, based on the captured images acquired through movement operation in the manual operation mode by the manual operation processor 44 and the detection data obtained by the state detector 34. The autonomous movement processor 43 performs autonomous movement of the mobile apparatus 10 based on learning data, which is a result of imitation learning by the learning unit 48.

The storing and reading unit 49, which is implemented by the instructions of the CPU 301, stores various data or information in the storage unit 3000 or reads out various data or information from the storage unit 3000.

### Destination candidate management table

FIG. 6 is a conceptual diagram illustrating an example of destination candidate management table. The destination candidate management table is a table for managing one or more candidates of a destination of the mobile apparatus 10. The storage unit 3000 stores a destination candidate management DB 3001, such as the destination candidate management table as illustrated in FIG. 6.

The destination candidate management table stores, for each site ID for identifying a site where the mobile apparatus 10 is disposed, destination candidate data associating a candidate ID for identifying a destination candidate, location information indicating a location of the destination candidate, and captured image data obtained by capturing a specific area of the site as the destination candidate. The location information is expressed by coordinate information including the latitude and longitude, which indicates the location of the destination candidate at the site. In a case where the mobile apparatus 10 is a flying object such as a drone, the location information includes information such as a speed, an orientation (position) or an altitude of the flying object in addition to the coordinate information indicating a latitude and a longitude. The captured image data corresponds to an electronic file of image data captured by the mobile apparatus 10 at the location of the destination candidate at the site. In the table, any information used for accessing the captured image may be used, such as a name of the captured image data file or a storage location. In this disclosure, the destination candidate is an example of a candidate of a movement destination of the mobile apparatus 10. The candidate of the movement destination of the mobile apparatus 10 includes not only a candidate of destination of the mobile apparatus 10 but also a candidate of a place to be excluded from the travel route of the mobile apparatus 10.

### Route information management table

FIG. 7 is a conceptual diagram illustrating an example of route information management table. The route information management table is a table for managing route information indicating a travel route of the mobile apparatus 10. The storage unit 3000 stores a route information management DB 3002, such as the route information management table as illustrated in FIG. 7.

The route information management table stores, for each site ID identifying the site where the mobile apparatus 10 is disposed, a route ID for identifying a travel route of the mobile apparatus 10 and route information indicating the travel route of the mobile apparatus 10 in association. The route information describes the travel route of the mobile apparatus 10 by arranging one movement destination by one movement destination in order, until the mobile apparatus 10 reaches the final destination. The route information is generated by the route information generator 37, for example, when the mobile apparatus 10 starts to travel.

### Map information management table

FIG. 8 is a conceptual diagram illustrating an example of map information management table. The map information management table is a table for managing map information, such as an environment map of the operation site where the mobile apparatus 10 is disposed. The storage unit 3000 stores a map information management DB 3003, such as the map information management table as illustrated in FIG. 8.

The map information management table stores map information associating the site ID and the site name for identifying the operation site where the mobile apparatus 10 is disposed, and a storage location of the environment map of the operation site. The storage location is, for example, destination information for accessing a storage area in the mobile apparatus 10 or an external server, in which the environment map is stored, and is expressed by a uniform resource locator (URL) or a uniform resource identifier (URI).

In the following, referring to FIGs. 32 to 34, an overview of an example operation site at which the mobile apparatus 10 is disposed will be described according to the embodiment. FIG. 32 is a diagram schematically illustrating an example of a travel route of the mobile apparatus 10. As illustrated in FIG. 32, the travel route of the mobile apparatus 10 indicates, for example, a route to the travel destination, by sequentially designating a plurality of specific site locations (WO, W1, W2,...) as waypoints at the operation site. Each site location at the operation site is represented by XY coordinates indicating a coordinate on map data representing the entire operation site.

FIG. 33 is a conceptual diagram illustrating an example of site location management table. The site location management table is a table for managing site location information indicating a specific site location at the operation site. The site location management table illustrated in FIG. 33 is included in the map information management DB 3003, for example.

The site location management table stores, for each site ID identifying the site where the mobile apparatus 10 is disposed, site location information associating a site location ID identifying a specific site location at the operation site, location information indicating the site location, and an adjacent ID indicating an adjacent site location adjacent to the site location. The site location ID is identification information for identifying a specific site location (WO, W1, W2,...) at the operation site. The adjacent ID indicates a site location ID for identifying an adjacent site location, adjacent to the specific site location. The site location management table stores a plurality of locations, at predetermined intervals of the operation site, along the travel route of the mobile apparatus 10. Each site location at the operation site is represented by XY coordinates indicating a coordinate on map data representing the entire operation site. The mobile apparatus 10 moves to a target movement destination based on the travel route having been set, using the location information and the adjacent ID of the site location information.

FIG. 34 is a conceptual diagram illustrating an example of area information management table. For example, the area information management table is a table for managing area information indicating an area of the operation site divided by task. The area information management table illustrated in FIG. 34 is included in the map information management DB 3003, for example.

The area information management table stores, for each site ID identifying the site where the mobile apparatus 10 is disposed, area information associating an area ID and an area name for identifying a specific area at the operation site, and a reference location indicating the location of the specific area. The reference location is location information used by the mobile apparatus 10 to specify a specific area at the operation site. The reference location is specified by, for example, two site locations along the travel route of the mobile apparatus 10.

For example, the operation site illustrated in FIG. 32 is divided into four areas (area 1 to area 4). For example, in a case the mobile apparatus 10 is to be moved to the area 1, the travel route is set to target the site location W8, which is the area reference location of the area 1, such that the mobile apparatus 10 travels from WO to W8 through W1, W2, W3, and W4.

### Learning data management DB

In the following, the learning data management DB 3004 in the storage unit 3000 is described according to the embodiment. The learning data management DB 3004 stores learning data, which is a result of learning, by the learning unit 48, autonomous travel route of the mobile apparatus 10. The learning data management DB 3004 stores, for example, captured image data acquired by the mobile apparatus 10, various types of detection data, and learning data as a result of imitation learning (machine learning) for each site or for each mobile apparatus 10. The mobile apparatus 10 performs autonomous movement based on the learning data stored in the learning data management DB 3004. The captured image data captured by the special image capturing device 12a or the general image capturing device 12b may include Pan-Tilt-Zoom (PTZ) parameters for specifying an imaging direction of the special image capturing device 12a or the general image capturing device 12b.

The captured image data including the PTZ parameters is stored (saved) in the storage unit 3000 (learning data management DB 3004) of the mobile apparatus 10. Alternatively, the PTZ parameters may be stored in the storage unit 3000 in association with the location information of the destination candidate. Specifically, when the captured image data of the destination candidate is acquired, as the location information, the coordinate data (x, y, θ) indicating the positioning (posture) of the mobile apparatus 10 at that time may be stored in the storage unit 3000. This makes it possible to correct the positioning of the mobile apparatus 10 using the PTZ parameters and the coordinate data (x, y, θ), in a case when a deviation occurs between the actual location where the mobile apparatus 10 stops and the location of the destination. Some data, such as data of the autonomous travel route (GPS trajectory) of the mobile apparatus 10 and captured image data of destination candidates used for display on the display apparatus 50, may be accumulated on a cloud computing service such as AMAZON WEB SERVICES (AWS), for example.

### Functional Configuration of Display Apparatus

Next, referring to FIG. 5, a functional configuration of the display apparatus 50 is described according to the embodiment. The display apparatus 50 includes a transmission and reception unit 51, an operation input unit 52, a display control unit 53, a determination unit 54, a manual operation command generator 55, an autonomous movement request generator 56, an image processing unit 57, and a storing and reading unit 59. These units are functions that are implemented by or that are caused to function by operating any of the elements illustrated in FIG. 4 in cooperation with the instructions of the CPU 501 according to the display apparatus control program expanded from the ROM 502 to the RAM 503. The display apparatus 50 further includes a storage unit 5000, implemented by the ROM 502, HD 504, or a recording medium 521 illustrated in FIG. 4.

The transmission and reception unit 51, which is implemented by the network I/F 508 that operates according to instructions of the CPU 501, transmits or receives various data or information to or from other device or terminal through the communication network 100.

The operation input unit 52, which is implemented by the keyboard 511 or the pointing device 512 that operates according to instructions of the CPU 501, receives various selections or inputs from the user. The display control unit 53, which is implemented by the instructions of the CPU 501, controls the display 506 to display various screens. The determination unit 54, which is implemented by instructions of the CPU 501, performs various determinations.

The manual operation command generator 55, which is implemented mainly by the instructions of the CPU 501, generates a manual operation command (instruction) for moving the mobile apparatus 10 by a manual operation in response to an input operation performed by the operator. The autonomous movement request generator 56, which is implemented mainly by the instructions of the CPU 501, generates an autonomous movement request for causing the mobile apparatus 10 to autonomously move. For example, the autonomous movement request generator 56 transmits an autonomous movement request to the mobile apparatus 10, based on information on the destination candidate selected by the operator.

The image processing unit 57, which is implemented mainly by the instructions of the CPU 501, generates a display image to be displayed on a display such as the display 506. For example, the image processing unit 57 generates a display image to be displayed at the display apparatus 50, by performing predetermined processing on the captured image acquired by the mobile apparatus 10. The communication system 1 may be provided with the function of at least one of the image processing unit 47 included in the mobile apparatus 10 and the image processing unit 57 included in the display apparatus 50.

The storing and reading unit 59, which is implemented by the instructions of the CPU 501, stores various data or information in the storage unit 5000 or reads out various data or information from the storage unit 5000.

### Processes and Operations

### Destination candidate registration processing

Next, referring to FIGs. 9 to 23, processes and operations performed by the communication system 1 are described according to the embodiment. First, referring to FIGs. 9 to 12, processing of registering a destination candidate of the mobile apparatus 10 is described according to the embodiment. FIG. 9 is a sequence diagram illustrating example processing of registering a destination candidate.

First, the display apparatus 50 starts operating the mobile apparatus 10 in response to a predetermined input operation by the operator (S11). The transmission and reception unit 51 transmits an operation start request to the mobile apparatus 10 (S12). Accordingly, the transmission and reception unit 31 of the control device 30 included in the mobile apparatus 10 receives the operation start request transmitted from the display apparatus 50.

Next, the image capturing control unit 33 of the control device 30 starts image capturing processing using the special image capturing device 12a and the general image capturing device 12b (S13). The image capturing control unit 33 acquires data of captured images captured by the special image capturing device 12a and the general image capturing device 12b. In this example, the images acquired by the image capturing processing of S13 are frames of video image. The transmission and reception unit 31 transmits the data of captured images acquired at S13 to the display apparatus 50 (S14). Thus, the transmission and reception unit 51 of the display apparatus 50 receives the captured image data transmitted from the mobile apparatus 10.

Next, the display control unit 53 of the display apparatus 50 displays an operation screen 200 including the captured image data received at S14 on the display such as the display 506 (S15). FIG. 10 is an illustration of an example operation screen. The operation screen 200 illustrated in FIG. 10 is a display screen for the operator to remotely operate the mobile apparatus 10.

The operation screen 200 includes a site display area 210 and a site display area 230. On the site display area 210, a captured image (planar image) captured by the general image capturing device 12b, which is received at S14, is displayed. On the site display area 230, a captured image (special image) captured by the special image capturing device 12a, received at S14, is displayed. The special image displayed in the site display area 230 is an image of the site in all directions, such as a spherical image, a wide-angle view image, or a hemispherical image, captured by the special image capturing device 12a, as described above. The special image, which is the image in all directions, may be an image obtained by combining images captured by the general image capturing device 12b while rotating. For example, the special image capturing device 12a may combine the images taken by the general image capturing device 12b. The site display area 230 further displays therein a mobile apparatus display image 235 indicating the presence of the mobile apparatus 10, which is superimposed on the special image. The operation screen 200 further displays coordinate information represented by latitude (Lat) and longitude (Lon), as location information indicating the current location of the mobile apparatus 10. In a case where the mobile apparatus 10 is a flying object such as a drone, the operation screen 200 may display information such as a speed, an orientation (position), or an altitude of the flying object, in addition to the coordinate information indicating the latitude and longitude. The operation screen 200 may display the captured images obtained by the special image capturing device 12a and the general image capturing device 12b, as live streaming images that are distributed in real time through a computer network such as the Internet.

The operation screen 200 further includes an operation icon 250 for allowing the operator to remotely operate the mobile apparatus 10. The operation icon 250 includes a plurality of direction instruction buttons, one of which may be pressed to request movement of the mobile apparatus 10 in a certain horizontal direction (forward, backward, right, left). The operator can remotely operate the mobile apparatus 10 by selecting the operation icon 250 while viewing the planar image displayed in the site display area 210 and the special image such as the spherical image displayed in the site display area 230. In this example, it is assumed that movement of the mobile apparatus 10 is remotely controlled, in response to reception of a selection of the operation icon 250 displayed on the operation screen 200. Alternatively, movement of the mobile apparatus 10 may be controlled by a dedicated controller, such as a keyboard or a game pad including a joystick.

The operation screen 200 further includes a destination candidate registration button 270, which is pressed to register a destination candidate using the planar image displayed in the site display area 210 or the special image displayed in the site display area 230. The following describes an example case in which a destination candidate is registered using the special image displayed in the site display area 230 when the destination candidate registration button 270 is pressed by the operator. However, another example case in which a destination candidate is registered using the planar image displayed in the site display area 210, as the destination candidate registration button 270 is pressed by the operator, is performed in a similar manner. The operation screen 200 further includes a destination setting button 290, which is pressed to set a destination of the mobile apparatus 10.

Next, the display apparatus 50 performs a manual operation on the mobile apparatus 10 using the operation screen 200 displayed at S15 (S16). Details of processing of S16 will be described later.

Next, when the operator presses the destination candidate registration button 270 on the operation screen 200, the operation input unit 52 receives a request for registering a destination candidate of an area included in the special image displayed in the site display area 230 (S17). Then, the transmission and reception unit 51 transmits a destination candidate registration request to the mobile apparatus 10 (S18). The destination candidate registration request is, for example, a request for capturing an image of an area included in the special image displayed in the site display area 230. Accordingly, the control device 30 included in the mobile apparatus 10 receives the destination candidate registration request transmitted from the display apparatus 50.

Next, the location information obtainer 35 of the control device 30 acquires location information indicating the current location of the mobile apparatus 10 using the GPS sensor 104 (S19). Specifically, the location information obtainer 35 acquires coordinate information including the latitude and longitude indicating the current location of the mobile apparatus 10. In a case where the mobile apparatus 10 is a flying object such as a drone, the location information obtainer 35 obtains, as the location information, information such as a speed, an orientation (position) or an altitude of the flying object in addition to the coordinate information of the latitude and longitude. The destination candidate obtainer 36 acquires a captured image captured by the special image capturing device 12a at the current location of the mobile apparatus 10 as an image of a destination candidate (S20). In this example, the captured image acquired as the destination candidate image by the destination candidate obtainer 36 is a still image.

Then, the storing and reading unit 49 stores the destination candidate data including the location information acquired at S 19 and the captured image acquired at S20 in the destination candidate management DB 3001 (see FIG. 6) (S21). The storing and reading unit 49 registers the location information and the captured image each acquired, as destination candidate data associated with each candidate ID for identifying the destination candidate. The candidate ID may be assigned automatically by the storing and reading unit 49, for example.

As described above, the communication system 1 displays the captured image captured by the mobile apparatus 10 at the display apparatus 50 of the operator who remotely operates the mobile apparatus 10. With this configuration, the operator can remotely operate the mobile apparatus 10 while visually checking surroundings of the mobile apparatus 10 in real time. Further, the communication system 1 previously registers a captured image obtained by capturing a specific area of the site, as a destination candidate to be used by the mobile apparatus 10 to autonomously move, in response to an input operation of the operator at the time of manual operation of the mobile apparatus 10.

### Manual Operation

Next, referring to FIGs. 11 and 12, S16 of performing manual operation of the mobile apparatus 10 is described in detail according to the embodiment. FIG. 11 is a sequence diagram illustrating example processing of performing manual operation of the mobile apparatus 10.

First, the operation input unit 52 of the display apparatus 50 receives selection of the operation icon 250 on the operation screen 200 displayed at S15, according to an input operation of the operator (S31). The manual operation command generator 55 generates a manual operation command according to a selected item of the operation icon 250 selected at S31 (S32). In the example of FIG. 10, since the operator selects the icon "forward (↑)", the manual operation command generator 55 generates a command for causing the mobile apparatus 10 to move forward. Then, the transmission and reception unit 51 transmits the manual operation command generated at S32 to the mobile apparatus 10 (S33). Accordingly, the control device 30 included in the mobile apparatus 10 receives the manual operation command transmitted from the display apparatus 50. In the operation of selecting the operation icon 250 by the operator, in a case where the operator selects the icon "backward (↓)" while the mobile apparatus 10 is moving forward, display of the captured image may be switched to a rear side image of the mobile apparatus 10. The mobile apparatus 10 then moves backward according to the manual operation command indicating backward. The display apparatus 50 may transmit the manual operation command to the mobile apparatus 10, for example, via a managed cloud platform such as AWS IOT CORE.

Next, the mode setter 42 of the control device 30 sets the operation mode of the mobile apparatus 10 to the manual operation mode (S34). Then, the manual operation processor 44 outputs an instruction to drive to the movement controller 40 based on the manual operation command received at S33. The movement controller 40 causes the mobile apparatus 10 to move in response to the instruction to drive from the manual operation processor 44 (S35). Further, the learning unit 48 performs imitation learning (machine learning) on the travel routes according to the manual operation by the manual operation processor 44 (S36). For example, the learning unit 48 performs imitation learning on the travel routes, based on the captured images acquired through movement operation in the manual operation mode by the manual operation processor 44 and the detection data obtained by the state detector 34. The learning unit 48 may perform imitation learning on travel routes using only captured images acquired during manual operation. Alternatively, the learning unit 48 may perform imitation learning on travel routes using both the captured images and detection data obtained by the state detector 34. Further, the captured image used for the imitation learning by the learning unit 48 may be a captured image, acquired by the autonomous movement processor 43, during the autonomous movement in the autonomous movement mode.

Then, the mobile apparatus 10 executes processing of registering the destination candidate during the movement operation (S37). FIG. 12 is a flowchart illustrating example processing of registering a destination candidate based on predetermined criteria, for example, according to the movement state of the mobile apparatus.

First, the determination unit 32 of the control device 30 determines whether or not a preset task has been executed by the task execution unit 45 (S51). Specifically, the task execution unit 45 causes the mobile apparatus 10 to execute a preset task according to a task execution request from the operator or a schedule set in advance, for example. Then, the determination unit 32 determines whether or not the preset task is executable under control of the task execution unit 45. In this disclosure, examples of the preset task executed by the task execution unit 45 include processing of capturing images for inspection of a facility at the site, and performing light work using the swing arm 16.

For example, after moving the site and entering an inspection area, the mobile apparatus 10 captures an image of an inspection target such as a meter or a valve for inspection. At this time, the mobile apparatus 10 stops moving to capture an image to obtain an image for inspection. Such operation may be used to trigger processing of registering the destination candidate. Further, the mobile apparatus 10 may use, as a registration name of the destination candidate, a registration name of an inspection target or a task, which has been input to a setting screen for setting an inspection image, for example, as illustrated in FIG. 35.

When it is determined that the preset task has been executed by the task execution unit 45 (YES at S51), the determination unit 32 proceeds operation to S56. On the other hand, when it is determined that the preset task is not executed by the task execution unit 45 (NO at S51), the determination unit 32 proceeds the operation to S52.

Next, the determination unit 32 determines whether or not the mobile apparatus 10 has stopped moving (S52). Specifically, when it is detected that driving control of the movement mechanism 15 by the movement controller 40 is stopped, the determination unit 32 determines that the mobile apparatus 10 stops moving. When the determination unit 32 determines that the mobile apparatus 10 has stopped moving (YES at S52), the determination unit 32 proceeds the operation to S56. On the other hand, when the determination unit 32 determines that the mobile apparatus 10 has not stopped moving (that is, it is moving) (NO at S52), the determination unit 32 proceeds the operation to S53.

Next, the determination unit 32 determines whether or not an intersection is detected near the mobile apparatus 10 (S53). Specifically, the image recognition processor 41 performs image recognition processing on a captured image acquired by the special image capturing device 12a or the general image capturing device 12b. Then, the determination unit 32 determines whether or not an intersection has been detected in the captured image as a result of the processing of the image recognition processor 41. In this example, the intersection is an example of a specific object detected by the image recognition processor 41. For example, the mobile apparatus 10 can acquire a special image viewed from different directions on the travel route at once regardless of a travel direction, at a specific location with certain characters such as an intersection. In addition to the intersection, the specific object may be an obstacle on or around the travel route of the mobile apparatus 10, a sign or a signal at the operation site, etc. The specific object differs depending on the type of the mobile apparatus 10, such that the specific object differs between the case where the mobile apparatus 10 travels on a road surface and the case where the mobile apparatus 10 flies like a drone. The mobile apparatus 10 is previously set with information on the specific object to be detected.

When the determination unit 32 determines that an intersection has been detected near the mobile apparatus 10 (YES at S53), the operation proceeds to S56. On the other hand, when the determination unit 32 determines that an intersection has not been detected near the mobile apparatus 10 (NO at S52), the operation proceeds to S54.

Next, the determination unit 32 determines whether or not the current location of the mobile apparatus 10 is close to a destination candidate registered in the destination candidate management DB 3001 (S54). Specifically, the determination unit 32 refers to the location information of the destination candidate stored in the destination candidate management DB 3001 and determines whether or not there is a series of destination candidates close to the current location of the mobile apparatus 10, acquired by the location information obtainer 35. The determination of whether or not the current location is close to the destination candidate is made based on, for example, a difference in coordinate values between the location of the destination candidate previously set and the current location of the mobile apparatus 10. Alternatively, the determination of whether or not the current location is close to the destination candidate may be made by performing image recognition on a captured image of the destination candidate (destination candidate image) and a captured image at the current location of the mobile apparatus 10.

In a case where the determination unit 32 determines that the current location of the mobile apparatus 10 is close to the destination candidate registered in the destination candidate management DB 3001 (YES at S54), the operation proceeds to S56. On the other hand, in a case where the determination unit 32 determines that the current location of the mobile apparatus 10 is not close to the destination candidate registered in the destination candidate management DB 3001 (NO at S54), the operation proceeds to S55.

Next, the determination unit 32 determines whether or not a direction indicated by the manual operation command transmitted from the display apparatus 50 has been changed (S55). Specifically, the determination unit 32 determines whether or not the movement direction indicated by the manual operation command is changed based on the manual operation command received at S33. For example, when the manual operation command indicates a predetermined operation with certain characteristic, the determination unit 32 determines that the movement direction has been changed. Examples of the predetermined operation with certain characteristic include steering by a certain amount or more, accelerating, and braking, which may be usually caused by the operator when traveling at an intersection or a curve.

When it is determined that the movement direction indicated by the manual operation command transmitted from the display apparatus 50 has been changed (YES at S55), the determination unit 32 proceeds the operation to S56. On the other hand, when the determination unit 32 determines that the movement direction indicated by the manual operation command transmitted from the display apparatus 50 is not changed (NO at S55), the determination unit 32 ends the operation.

Then, at S56, the location information obtainer 35 of the control device 30 acquires location information indicating the current location of the mobile apparatus 10 using the GPS sensor 104. This step corresponds to S19 of FIG. 9. In addition, the destination candidate obtainer 36 acquires a captured image captured by the special image capturing device 12a at the current location of the mobile apparatus 10 as a destination candidate image indicating a destination candidate of the moving apparatus 10 (S57). This step corresponds to S20 of FIG. 9.

Then, the storing and reading unit 49 stores the destination candidate data including the location information acquired at S56 and the captured image acquired at S57 in the destination candidate management DB 3001 (see FIG. 6) (S58). This step corresponds to S21 of FIG 9. The storing and reading unit 49 registers the location information and the captured image each acquired, as destination candidate data associated with each candidate ID for identifying the destination candidate. The candidate ID may be assigned automatically by the storing and reading unit 49, for example.

As described above, the mobile apparatus 10 can automatically capture an image of the surroundings of the mobile apparatus 10 using the image capturing device 12 mounted on the mobile apparatus 10, based on a predetermined determination criterion according to the moving state of the mobile apparatus 10, and register in advance the captured image indicating a candidate of a movement destination of the mobile apparatus 10. The determination criterion by the determination unit 32 is not limited to the processing described above referring to S51 to S55, such that the determination criterion is appropriately set according to details of the manual operation of the mobile apparatus 10 and the environment around the mobile apparatus 10. The determination criterion by the determination unit 32 may be based on, for example, a state change of the mobile apparatus 10 to be recognized by the operator when the operator selects a destination of the mobile apparatus 10, a condition of the operation site, an environmental change at the operation site, etc.
For example, the mobile apparatus 10 may automatically register a captured image captured by the image capturing device 12 as a destination candidate when the captured image contains a specific character string with certain characteristic. In such case, the mobile apparatus 10 performs optical character recognition (OCR) on the captured image captured by the image capturing device 12 during movement. When the specific character string is recognized, the mobile apparatus 10 registers the recognized character string and the captured image as destination candidate data. For example, in a case where the destination candidate is a chemical plant, a tank is usually written with a tank number (or a tank name) or contents of the tank. The mobile apparatus 10 registers a keyword (character string) such as the name or the contents, with the captured image, thus making it easy to perform data search.

Alternatively or additionally, the mobile apparatus 10 may refer to the learning data management DB 3004, to automatically register a captured image of a specific location as a destination candidate, when the mobile apparatus 10 moves to the specific location away from locations, indicated by the coordinates of the operation site that the mobile apparatus 10 has traveled. Alternatively or additionally, the mobile apparatus 10 may refer to the map information management DB 3003, to determine whether information indicating a characteristic landmark and coordinates thereof is stored. When such information is stored, the mobile apparatus 10 may automatically register a captured image, captured at the time when the mobile apparatus 10 reaches or passes near the landmark, as a destination candidate. Further, when a name of such landmark is stored in the map information management DB 3003, the mobile apparatus 10 may register the stored name of that landmark in association with the captured image as the destination candidate. Although FIG. 12 has been described as processing performed when the mobile apparatus 10 is manually operated, the above-described processing of registering a destination candidate referring to FIG. 12 may be performed when the mobile apparatus 10 autonomously moves. Further, the processing of registering a destination candidate illustrated in FIGs. 9 to 12 is an example of processing of registering a movement candidate of the mobile apparatus 10. Furthermore, the processing of registering may be performed not only for registering a destination candidate of the mobile apparatus 10, but also for registering a candidate of a place to be excluded from the travel route of the mobile apparatus 10.

### Processing of Setting Destination

Next, referring to FIGs. 13 to 18, processing of setting a destination of the mobile apparatus 10, using the destination candidates registered through the above-described process, is described according to the embodiment. FIG. 13 is a sequence diagram illustrating example processing of setting a destination of the mobile apparatus 10.

First, the operation input unit 52 of the display apparatus 50 receives selection of the destination setting button 290 by an input operation of the operator on the operation screen 200 (S71). Next, the transmission and reception unit 51 transmits a destination candidate acquisition request for requesting data indicating a destination candidate, to the mobile apparatus 10 (S72). The destination candidate acquisition request includes a site ID for identifying a site where the mobile apparatus 10 is disposed. Accordingly, the transmission and reception unit 31 of the control device 30 included in the mobile apparatus 10 receives the destination candidate acquisition request transmitted from the display apparatus 50.

Next, the storing and reading unit 49 of the control device 30 searches the destination candidate management DB 3001 (see FIG. 6) using the site ID indicated by the destination candidate acquisition request, received at S72, as a search key, to read destination candidate data associated with the same site ID as the received site ID (S73). Then, the transmission and reception unit 31 transmits the destination candidate data read at S73 to the display apparatus 50 as a request source (S74). The destination candidate data read at S73 includes, for each of a plurality of destination candidates, the candidate ID, the captured image, and the location information (See FIG. 6). Thus, the transmission and reception unit 51 of the display apparatus 50 receives to acquire the destination candidate data transmitted from the mobile apparatus 10.

Next, the display control unit 53 of the display apparatus 50 displays a selection screen 400 including the destination candidate data received at S74 on the display such as the display 506 (S75). Specifically, the image processing unit 57 generates the selection screen 400 based on the received destination candidate data. Specifically, the image processing unit 57 generates the selection screen 400 including the plurality of captured images, as candidate images, based on the received destination candidate data. Then, the display control unit 53 displays the selection screen 400 generated by the image processing unit 57. This processing of generating the selection screen 400 may alternatively be performed by the image processing unit 47 of the control device 30. In such case, the image processing unit 47 generates the selection screen 400 based on the destination candidate data read at S73. At S74, the transmission and reception unit 31 transmits the selection screen 400 including the destination candidate data generated by the image processing unit 47 to the display apparatus 50.

FIGs. 14 and 15 illustrate examples of the selection screen. The selection screens 400 illustrated in FIGs. 14 and 15 are each a display screen that allows the operator to select a destination to which the mobile apparatus 10 travels.

The selection screen 400 includes an image display area 410, which displays a plurality of captured images (destination candidate images) 415 (415a to 417f), included in the destination candidate data received at S74, for selection by the operator. The selection screen 400 further includes an OK button 430 to be pressed when selection is completed, and a cancel button 435 to be pressed when selection is cancelled. The operator selects one or more captured images 415 displayed in the image display area 410 using an input unit such as the pointing device 512.

When the operator selects a captured image 415 displayed in the image display area 410, the operation input unit 52 of the display apparatus 50 receives selection of destination candidate image, which indicates an area to be set as a destination (S76). The selection screen 400 illustrated in FIG. 15 indicates, for example, a state in which the captured images 415a, 415b, and 415c are selected by the operator. When a specific captured image 415 displayed in the image display area 410 is selected, the selected captured image is displayed in a selection result display area 420 on the selection screen 400 as illustrated in FIG. 15. The selection result display area 420 displays the selected captured images in an order selected by the operator (No.1 to No.3). For example, the operator selects, as a movement destination of the mobile apparatus 10, a captured image with an area indicating a location where the mobile apparatus 10 causes execution of a preset task, or a captured image with an area indicating a branch, such as an intersection, on a travel route at the site in a case when the mobile apparatus 10 moves to the location where the preset task is to be executed.

As described above, the display apparatus 50 selects an area indicated by the captured image 415 as a movement destination of the mobile apparatus 10 using the captured image 415 (destination candidate image) indicating a movement destination candidate of the mobile apparatus 10, which has been captured in advance by the mobile apparatus 10. This improves operability in selecting a movement destination of the mobile apparatus 10, for example, as compared to the method of allowing the operator to input a character string indicating location information or a keyword.

Next, when the selection of the destination candidate image is received at S76 and the operator presses the OK button 430, the autonomous movement request generator 56 of the display apparatus 50 generates autonomous movement request information (S77). The autonomous movement request information includes one or more candidate IDs respectively associated with the one or more captured images 415 having been selected at S76 and information indicating the order in which the selection of the one or more captured images is received at S76.

Next, the transmission and reception unit 51 transmits the autonomous movement request information generated at S77 to the mobile apparatus 10 (S78). Accordingly, the transmission and reception unit 31 of the control device 30 included in the mobile apparatus 10 receives the autonomous movement request information transmitted from the display apparatus 50. Then, the mobile apparatus 10 starts autonomous movement processing based on the autonomous movement request information received at S78 (S79).

### Autonomous Movement Processing

Next, referring to FIGs. 16 to 18, autonomous movement processing by the mobile apparatus 10, performed at S79, is described in detail according to the embodiment. FIG. 16 is a flowchart illustrating an example of autonomous movement processing performed by the mobile apparatus 10.

First, when the autonomous movement request information is received at S78, the mode setter 42 of the control device 30 included in the mobile apparatus 10 sets the operation mode of the mobile apparatus 10 to the autonomous movement mode (S91). Next, the route information generator 37 generates route information indicating an autonomous travel route of the mobile apparatus 10 based on the autonomous movement request information received at S78 (S92). Specifically, based on the candidate IDs and the order of selecting the captured images 415 identified by the candidate IDs, which are indicated by the received autonomous movement request information, the route information generator 37 generates a travel route such that the mobile apparatus 10 autonomously moves to the areas of the captured images 415, according to the order in which the captured images 415 are selected by the operator. The route information generator 37 does not have to generate a travel route according to the order in which the captured images 415 are selected. Alternatively, the route information generator 37 may generate route information based on locations where the captured images 415 are captured, which are stored in the destination candidate management DB 3001, such that the distance or travel time of the travel route based on the selected captured images 415 becomes shorter. Then, the route information manager 38 stores the route information generated at S92 in the route information management DB 3002 (see FIG. 7) in association with the site ID received at S72 (S93).

Next, the location information obtainer 35 acquires location information indicating the current location of the mobile apparatus 10 (S94). The destination setter 39 sets a movement destination of the mobile apparatus 10 based on the current location of the mobile apparatus 10 acquired by the location information obtainer 35 and the route information generated at S92 (S95). Specifically, for example, the destination setter 39 sets, as the movement destination, a location of a destination to which the mobile apparatus 10 should go next, from among a plurality of destinations each identified by the candidate ID of the generated route information. For example, in a case where autonomous movement just starts, the destination setter 39 sets the location of the destination specified by the first candidate ID of the route information, as the movement destination. Then, the destination setter 39 generates a travel route from the current location of the mobile apparatus 10, which is acquired, to the movement destination that is set. Example methods of generating the travel route, by the destination setter 39, include a method of connecting from the current location to the destination with a straight line, and a method of minimizing the travel time by avoiding an obstacle using a captured image or information of the obstacle obtained by the state detector 34. The method of generating the travel route, by the destination setter 39, is not limited to generating the travel route using the location information of a candidate of destination candidate (movement destination) registered in the destination candidate management DB 3001. Alternatively, the image processing unit 47 may perform image recognition processing on the captured image captured by the image capturing device 12. Based on the result, the destination setter 39 may identify a location displayed by the captured image 415, as a movement destination that is set. For example, the destination setter 39 may generate the travel route to the movement destination that is set, using coordinates of the site location indicated in the site location management table (see FIG. 32) and the area information management table (see FIG. 33). In such case, the destination setter 39 may generate the shortest travel route using a general route search method (Dijkstra's algorithm, A-star algorithm, etc.), based on adjacent site locations that are specified using the adjacent IDs stored in the site location management table.

Then, the movement controller 40 causes the mobile apparatus 10 to travel to the movement destination that is set, through the travel route generated at S92. In this case, the movement controller 40 causes the mobile apparatus 10 to autonomously move in response to a drive command from the autonomous movement processor 43. For example, the autonomous movement processor 43 executes autonomous movement based on learning data that is a result of imitation learning by the learning unit 48 (S96).

When the mobile apparatus 10 has reached the final destination (YES at S97), the movement controller 40 ends the process. On the other hand, when the mobile apparatus 10 has not reached the final destination (NO at S97), the movement controller 40 repeats the processing from S94 and continues the autonomous movement until the mobile apparatus 10 reaches the final destination.

In this manner, the mobile apparatus 10 autonomously moves to the location corresponding to an area of the captured image 415, which is selected by the operator as the destination of the mobile apparatus 10. The mobile apparatus 10 autonomously moves according to the generated route information, or the learning data learned in the manual operation mode, in the autonomous movement mode.

Referring to FIGs. 17 and 18, examples of an operation screen displayed on the display apparatus 50 during autonomous movement of the mobile apparatus 10 are described according to the embodiment. In the following description, differences from the configuration of the operation screen 200 illustrated in FIG. 10 are described. The operation screen 600A illustrated in FIG. 17 includes a state display area 610A indicating the movement state of the mobile apparatus 10 and a site display area 630A in which a captured image captured by the mobile apparatus 10 is displayed. The state display area 610A displays a destination candidate image indicating the movement destination set at S95 and the current location of the mobile apparatus 10, expressing that the mobile apparatus 10 is heading toward the location indicated by the destination candidate image. The site display area 630A of FIG. 17 displays a special image acquired by the special image capturing device 12a, similarly to the site display area 230 of the operation screen 200 illustrated in FIG. 10. The site display area 630A further includes a mobile apparatus display image 635A representing presence of the mobile apparatus 10, which is superimposed on the special image, similarly to the site display area 230 of the operation screen 200. The site display area 630A further includes a destination display image 640 representing the movement destination that is set, which is superimposed at a position of the special image corresponding to the movement destination that is set at S95.

The operation screen 600A further includes a stop button 690 to be pressed to instruct the mobile apparatus 10 to stop the autonomous movement. When the operator presses the stop button 690, in response to request for stopping from the display apparatus 50, the mobile apparatus 10 interrupts the autonomous movement by the autonomous movement processor 43, such that the mobile apparatus 10 stops moving.

The operation screen 600B illustrated in FIG. 18 is a display screen displayed when the mobile apparatus 10 autonomously moves toward a plurality of destinations. The operation screen 600B illustrated in FIG. 18 includes a state display area 610B indicating the movement state of the mobile apparatus 10 and a site display area 630B including a captured image captured by the mobile apparatus 10. The state display area 610B displays destination candidate images corresponding to a plurality of destination waypoints included in the route information generated at S92, and the current location of the mobile apparatus 10, and indicates which destination the mobile apparatus 10 is currently heading for. Similarly to the site display area 630A, the site display area 630B displays a special image acquired by the special image capturing device 12a, and a mobile apparatus display image 635B representing presence of the mobile apparatus 10, which is superimposed on the special image. Further, similarly to the operation screen 600A, the operation screen 600B includes the stop button 690 to be pressed to instruct the mobile apparatus 10 to stop the autonomous movement.

In the site display area 630B, two destination display images 650 (650a, 650b) each indicating the destination waypoint are superimposed at positions of the special image corresponding to the destination waypoints included in the route information generated at S92. In the example of FIG. 18, the destination display images 650a and 650b respectively representing the destination waypoints No.2 and No. 3 are displayed.

As described above, the display apparatus 50 displays in real time the state of autonomous movement of the mobile apparatus 10 heading for the destinations selected by the operator, each having the location displayed in the captured image 415. This enables the operator to check the current location and the movement state of the mobile apparatus 10 even when the mobile apparatus 10 autonomously moves.

### Modified Examples of Selection Screen

Next, referring to FIGs. 19 to 23, modified examples of the selection screen 400 displayed on the display apparatus 50 are described according to the embodiment. FIG. 19 is a diagram illustrating a first modified example of the selection screen. The selection screen 400A illustrated in FIG. 19 is different from the selection screens 400 illustrated in FIGs. 14 and 15 in content of the image display area 410A.

The image display area 410A displays one special image 450, from among the captured images included in the destination candidate data received at S74. The operator searches for a desired location to be selected as a destination, by changing a display position of the special image displayed in the image display area 410A. As described above, the special image is an image of the site having been captured in all directions. The display position of the special image 450 displayed in the image display area 410A is changed in response to a swipe operation on the screen or an input operation on one of the display position change buttons 451 (451a to 451d).

Alternatively, the operator may select a destination by designating a predetermined position of the special image 450 displayed in the image display area 410A using an input device such as the pointing device 512. When the operator designates the predetermined position on the special image 450 displayed in the image display area 410A, the operation input unit 52 of the display apparatus 50 receives selection of the designated position on the special image 450. The image display area 410A displays a designated position image 455 indicating a position on the special image 450 designated by the operator, which is superimposed on the special image 450. Similarly to the selection screen 400 illustrated in FIG. 15, the selection screen 400A displays, in the selection result display area 420, the destination candidate image corresponding to the position on the special image 450 designated by the operator.

Further, the selection screen 400A includes a file import (read file) button 457, which, when pressed, selects or changes the special image 450 to be displayed in the image display area 410A. When the operator selects the file import button 457 to designate a predetermined image file, the display control unit 53 displays a different special image in the image display area 410A, from among the captured image files received at S74.

In this example, autonomous movement request generator 56 generates the autonomous movement request information, which includes location information indicating the designated position on the particular captured image, in addition to the candidate ID of the particular captured image being displayed.

As described above, the selection screen 400A allows the operator to select the movement destination of the mobile apparatus 10 using the special image 450 captured by the mobile apparatus 10. Accordingly, the operator can select a predetermined position of one special image 450 that captures the site in all directions, as a candidate of the movement destination. That is, operability for the operator in selecting the movement destination of the mobile apparatus 10 improves.

FIG. 20 is a diagram illustrating a second modified example of the selection screen. The selection screen 400B illustrated in FIG. 20 includes, in addition to the content of the selection screen 400, a map image 470 indicating the location where the destination candidate image selected by the operator is captured. The map image 470 may be a pop-up window.

The selection screen 400B further includes a map display button 460 to be pressed to display the map image 470. The map image 470 includes a current location display image 471 indicating the current location of the mobile apparatus 10, and a display selection button 475 to be pressed to enlarge or reduce a display size of the displayed map. Further, the map image 470 includes one or more image capturing location display images 473 (473a to 473c) on the map, each indicating the location where the captured image 415, selected by the operator, has been captured. In the example of FIG. 20, the image capturing location display images 473a to 473c are displayed at positions on the map, respectively corresponding to the image capturing locations of the captured images No. 1 to No. 3.

When the operation input unit 52 receives the selection of the map display button 460, the display apparatus 50 transmits a map display request for requesting display of a map to the mobile apparatus 10. Then, the mobile apparatus 10 reads out map image data corresponding to the site ID of the site where the mobile apparatus 10 is disposed, which is stored in the map information management DB 3003 (see FIG. 8), and transmits the map image data to the display apparatus 50 as a request transmission source. Then, the display control unit 53 of the display apparatus 50 displays the current location display image 471 and the image capturing location display image 473, such that these images are superimposed on the received map image data. Specifically, in one example, the display control unit 53 superimposes image capturing location display image 473 at a position of the map image 470, based on the location information of the captured image 415.

As described above, when the operator is selecting a destination of the mobile apparatus 10, the selection screen 400B displays the position on the map corresponding to an area indicated by the captured image for selection. This allows the operator to visually recognize which location of the site the area indicated by the captured image for selection is located. In this example, the selection screen 400B may display the current location display image 471 and the image capturing location display image 473, respectively, such that these images are superimposed on a simplified map that does not accurately reflect a scale of distance. In such case, the selection screen 400B is provided with a user interface that allows the operator to easily recognize the travel route of the mobile apparatus 10. More specifically, this reduces the difficulty in understanding the travel route of the mobile apparatus 10 by the operator, which may otherwise be caused due to a difference between connections of the image capturing locations indicated by the image capturing location display images 473 and a resolution of the map.

FIG. 21 is a diagram illustrating a third modified example of the selection screen. The selection screen 400C illustrated in FIG. 21 is different from the selection screen 400 illustrated in FIG. 15 and the selection screen illustrated in FIG. 19, in content of a selection result display area 480.

The selection result display area 480 includes information on an estimated time for the mobile apparatus 10 to move to the location corresponding to the captured image 415 selected by the operator. In the example of FIG. 21, an estimated time for the mobile apparatus 10 to move from the current location to an area indicated by the captured image No. 1 is 1 minute and 5 seconds. An estimated time for the mobile apparatus 10 to move from the area indicated by the captured image No. 1 to an area indicated by the captured image No. 2 is 1 minute and 40 seconds. An estimated time for the mobile apparatus 10 to move from the area indicated by the captured image No. 2 to an area indicated by the captured image No. 3 is 1 minute. The selection result display area 480 further displays a total estimated time (3 minutes and 45 seconds in the example of FIG. 21) for the mobile apparatus 10 to move to the areas indicated by all the captured images 415 selected by the operator.

The image processing unit 47 of the mobile apparatus 10 or the image processing unit 57 of the display apparatus 50 estimates a time it takes the mobile apparatus 10 to move between two points, according to the current location of the mobile apparatus 10 and the location of the area indicated by one of the plurality of captured images 415 selected by the operator. The estimation is based on information on the movement speed of the mobile apparatus 10, which may be previously set, and a relative distance of the respective waypoints at the operation site obtained based on the location information of the waypoints. Either the image processing unit 47 or the image processing unit 57 generates the selection screen 400C including information on the estimated time. The display control unit 53 displays the generated selection screen 400C on a display such as the display 506. In the above-described processing of registering a destination candidate, when a name of the destination candidate or a character string (keyword) obtained by OCR processing is registered in the destination candidate management DB 3001 in association with the captured image data, the selection screen 400C may display the name of the destination candidate corresponding to the captured image or the keyword, as additional information.

When the mobile apparatus 10 executes a preset task in the area indicated by the selected captured image 415, the selection screen 400C may display not only the estimated time for movement, but also a time additionally including an estimated time it takes for executing the task.

As described above, the selection screen 400C displays an estimated time for the mobile apparatus 10 to move to the area indicated by the captured image 415 selected by the operator. This allows the operator to appropriately determine whether or not to select a movement destination based on the time for movement, or determine an order of traveling to a plurality of movement destinations based on the time for movement.

FIG. 22 is a diagram illustrating a fourth modified example of the selection screen. The selection screen 400D illustrated in FIG. 22 is different from the selection screen 400 illustrated in FIG. 14 in content of the image display area 410.

The image display area 410 of the selection screen 400D displays additional information 490 (490a, 490b, 490c, 490e) representing characteristic of an object in the captured image 415, in association with the captured image 415 (415a to 415f). The additional information 490 includes a character string indicating a name of the object in the captured image 415 such as a building or facility, information indicating conditions of the object in the captured image 415 such as an intersection, a slope, or a road surface. In the example of FIG. 22, the additional information 490a indicating "meter A5" is displayed in association with the captured image 415a. The additional information 490b indicating "tank B9" is displayed in association with the captured image 415b. The additional information 490c indicating "Building C" is displayed in association with the captured image 415. The additional information 490e indicating "Building Y" is displayed in association with the captured image 415e.

Either the image processing unit 47 of the mobile apparatus 10 or the image processing unit 57 of the display apparatus 50 specifies information corresponding to the image capturing location of the captured image 415, based on a result of image recognition processing on the captured image 415 using information related to the site that is previously set and an image of an object present at the site. Then, either the image processing unit 47 or the image processing unit 57 generates the selection screen 400D in which the specified information is associated with the corresponding captured image 415 as additional information. The display control unit 53 displays the generated selection screen 400D on a display such as the display 506.

As described above, the selection screen 400D displays information on the characteristic such as the name of the object in the captured image 415 as the additional information 490, with the captured image 415 (destination candidate image) indicating a candidate of the movement destination of the mobile apparatus 10. This allows the operator to make determinations more appropriately, compared to a case where the movement destination of the mobile apparatus 10 is selected just by viewing the captured image 415. In this case, in processing of setting the movement destination of the mobile apparatus 10 at S95, the destination setter 39 generates the travel route using the location information of the destination candidate (movement destination) registered in the destination candidate management DB 3001, but it is not limited to this example. Alternatively, the destination setter 39 may generate the travel route by specifying the position in the captured image 415, using information on the object in the captured image 415 specified through the image recognition processing.

FIG. 23 is a diagram illustrating a fifth modified example of the selection screen. The selection screen 400E illustrated in FIG. 23 is an example of a screen including the captured image 415 (415a to 417f), which is displayed as information related to setting of a travel route of autonomous movement of the mobile apparatus 10. In this example, the captured image 415 (415a to 417f) displayed in the image display area 410 may be used for a purpose other than selection of a destination of the mobile apparatus 10.

The selection screen 400E includes a destination selection button (select destination) 440 and exclusion route selection button (select route to exclude) 445. The destination selection button 440 is pressed to select a destination of the mobile apparatus 10 using the captured image 415 displayed in the image display area 410 as described above. The exclusion route selection button 445 is pressed to select an exclusion route to be excluded from a travel route, when the mobile apparatus 10 is moved to a destination selected by the captured image 415 displayed in the image display area 410. The execution route is selected, for example, to set a location to be excluded from the travel route of the mobile apparatus 10, that is, a location where the mobile apparatus 10 is restricted from traveling, when the moving body 10 autonomously moves. In selecting the exclusion route, for example, the operator checks an obstacle or conditions of a road surface of the site, displayed in the captured image 415, and selects the captured image 415 having an area that is not suitable for travel by the mobile apparatus 10, as an exclusion route.

After designating (pressing) the destination selection button 440 or the exclusion route selection button 445, the operator can select the captured image 415 displayed in the image display area 410, to select an image corresponding to the designated selection mode. With the selection screen 400E that provides both functions of the destination selection and the excluded route selection, the operator selects the captured image so as to move the mobile apparatus 10 to a desired destination without travelling through the excluded route.

The selection screen 400E allows the operator to use the captured image 415, previously registered in processing of registering a candidate of movement destination of the mobile apparatus 10, in an application other than selection of a destination of the mobile apparatus 10. This improves operability for the operator in selecting a movement destination such as a travel destination, and an excluded route to excluded from the travel route, of the mobile apparatus 10.

As described above, the communication system 1 previously registers the captured image 415, which is a still image of a partial area of the site, as a candidate of movement destination of the mobile apparatus 10. The display apparatus 50 of the communication system 1 displays the registered captured image 415 on the display, and allows the operator to select a movement destination of the mobile apparatus 10 using the captured image 415. This improves operability for the operator in setting a movement destination of the mobile apparatus 10. The communication system 1 allows the operator to select a plurality of captured images 415 displayed on the display apparatus 50 in order determined by the operator. This allows the operator to set a travel route of the mobile apparatus 10, which indicates to travel a plurality of movement destinations according to the determined order.

Further, the communication system 1 automatically acquires the captured image 415 to be registered as a movement destination candidate, by capturing an area of the site with the mobile apparatus 10, based on predetermined criteria, for example, according to the movement state of the mobile apparatus 10. This reduces time and effort required to register the movement destination candidate. In the communication system 1, the display apparatus 50 displays the captured image 415, which is automatically acquired based on some criteria, for example, according to the movement state of the mobile apparatus 10. That is, the display apparatus 50 provides a display screen (for example, the selection screen 400) that allows the operator to easily set a travel route of the mobile apparatus 10.

### Variations of Embodiment

### First Variation

Next, referring to FIGs. 24 to 27, a communication system 1A is described according to a first variation of the embodiment. In the first variation, the elements that are substantially same to the elements described in the above-described embodiment are assigned with the same reference numerals. For descriptive purposes, description thereof is omitted. The communication system 1A according to the first variation is provided with an information processing apparatus 90 that manages destination candidates of a mobile apparatus 10A.

FIG. 24 is a diagram illustrating an example of a configuration of the communication system 1A according to the first variation of the embodiment. The communication system 1A according to the first variation includes the mobile apparatus 10A, a display apparatus 50A, and the information processing apparatus 90 capable of communicating with the mobile apparatus 10A and the display apparatus 50A via the communication network 100.

The information processing apparatus 90 is implemented by a server computer, which controls communication between the mobile apparatus 10A and the display apparatus 50A, controls operation of the mobile apparatus 10A, and generates various display screens to be displayed on the display apparatus 50A. The information processing apparatus 90 may be implemented by one server computer or a plurality of server computers. The information processing apparatus 90 is described as a server computer residing on a cloud network, but the information processing apparatus 90 may be a server residing on an on-premise network. In this disclosure, the information processing apparatus 90 has a hardware configuration same as that of the display apparatus 50 illustrated in FIG. 4. For the descriptive purposes, the hardware elements of the information processing apparatus 90, which are illustrated in FIG. 4, are denoted by reference numerals in 900 series.

FIG. 25 is a diagram illustrating an example of a functional configuration of the communication system 1A according to the first variation of the embodiment. The display apparatus 50A of FIG. 25 according to the first variation is the same in configuration as the the display apparatus 50 illustrated in FIG. 5. The control device 30A that controls processing or operation of the mobile apparatus 10A according to the first variation is substantially the same as that of the control device 30 of the mobile apparatus 10 illustrated in FIG. 5, except that the map information manager 46, and the destination candidate management DB 3001, the map information management DB 3003, and the learning data management DB 3004 in the storage unit 3000 are excluded.

The information processing apparatus 90 includes a transmission and reception unit 91, a map information manager 92, and a storing and reading unit 99. These units are functions that are implemented by or that are caused to function by operating any of the elements illustrated in FIG. 4 in cooperation with the instructions of the CPU 901 according to the information processing apparatus control program expanded from the ROM 902 to the RAM 903. The information processing apparatus 90 further includes a storage unit 9000, implemented by the ROM 902, HD 904, or a recording medium 921 illustrated in FIG. 4.

The transmission and reception unit 91, which is implemented by the network I/F 908 that operates according to instructions of the CPU 901, transmits or receives various data or information to or from other device or terminal through the communication network 100.

The map information manager 92, which is implemented mainly by the instructions of the CPU 901, manages map information such as an environment map of the operation site where the mobile apparatus 10A is disposed, which is stored in a map information management DB 9002. For example, the map information manager 92 manages map information such as the environment map, downloaded from an external server or created by applying SLAM.

The storing and reading unit 99, which is implemented by the instructions of the CPU 901, stores various data or information in the storage unit 9000 or reads out various data or information from the storage unit 9000. The storage unit 9000 stores a destination candidate management DB 9001, a map information management DB 9002, and a learning data management DB 9003. The destination candidate management DB 9001 is implemented by the destination candidate management table illustrated in FIG. 6. The map information management DB 9002 is implemented by the map information management table illustrated in FIG. 8. The learning data management DB 9003 has a same data structure as that of the learning data management DB 3004 in the storage unit 3000 of the mobile apparatus 10 described above.

FIG. 26 is a sequence diagram illustrating an example processing of registering a destination candidate, according to the first variation of the embodiment. The processing from S101 to S107 is the same as processing from S11 to S17 illustrated in FIG. 9, and thus description thereof is omitted.

At S108, the transmission and reception unit 51 of the display apparatus 50A transmits a destination candidate registration request to the information processing apparatus 90. Accordingly, the transmission and reception unit 91 of the information processing apparatus 90 receives the destination candidate registration request transmitted from the display apparatus 50A.

Next, the transmission and reception unit 91 of the information processing apparatus 90 transmits a request for obtaining data (data acquisition request), which is to be used for registration of a destination candidate to the mobile apparatus 10A (S109). The transmission and reception unit 31 of the control device 30A included in the mobile apparatus 10A receives the data acquisition request transmitted from the information processing apparatus 90.

Next, the location information obtainer 35 of the control device 30A acquires location information indicating the current location of the mobile apparatus 10A using the GPS sensor 104 (S110). Specifically, the location information obtainer 35 acquires coordinate information including the latitude and longitude indicating the current location of the mobile apparatus 10A. In a case where the mobile apparatus 10A is a flying object such as a drone, the location information obtainer 35 obtains, as the location information, information such as a speed, an orientation (position) or an altitude of the flying object in addition to the coordinate information of the latitude and longitude. In addition, the destination candidate obtainer 36 acquires a captured image captured by the special image capturing device 12a at the current location of the mobile apparatus 10A as a destination candidate image indicating a destination candidate of the mobile apparatus 10A (S111). The transmission and reception unit 31 transmits the location information acquired at S110 and the captured image acquired at S111 to the information processing apparatus 90 as a request source (S112). The transmission and reception unit 91 of the information processing apparatus 90 receives the location information and the captured image transmitted from the mobile apparatus 10A.

The storing and reading unit 99 stores the destination candidate data including the location information and the captured image received at S112 in the destination candidate management DB 9001 (S113). Specifically, the storing and reading unit 99 registers the location information and the captured image each received, as destination candidate data associated with each candidate ID for identifying the destination candidate. Similarly to the above-described embodiment, the processing of registering a destination candidate illustrated in FIG. 26 is one example of processing of registering a movement candidate of the mobile apparatus 10A. The processing of registering may be performed not only for registering a destination candidate of the mobile apparatus 10A, but also for registering a candidate of a place to be excluded from the travel route of the mobile apparatus 10A.

FIG. 27 is a sequence diagram illustrating an example processing of setting a destination candidate of the mobile apparatus 10A, according to the first variation of the embodiment. First, as described above referring to S71 of FIG. 13, the operation input unit 52 of the display apparatus 50A receives selection of the destination setting button 290 by an input operation of the operator on the operation screen 200 (S131). Next, the transmission and reception unit 51 transmits a destination candidate acquisition request for requesting data indicating a destination candidate, to the information processing apparatus 90 (S132). The destination candidate acquisition request includes a site ID for identifying a site where the mobile apparatus 10A is disposed. Accordingly, the transmission and reception unit 91 of the information processing apparatus 90 receives the destination candidate acquisition request transmitted from the display apparatus 50A.

Next, the storing and reading unit 99 of the information processing apparatus 90 searches the destination candidate management DB 3001 (see FIG. 6) using the site ID of the destination candidate acquisition request, received at S132, as a search key, to read destination candidate data associated with the same site ID as the received site ID (S133). Then, the transmission and reception unit 91 transmits the destination candidate data read at S133 to the display apparatus 50A as a request source (S134). The destination candidate data read at S133 includes, for each of a plurality of destination candidates, the candidate ID, the captured image, and the location information. The display apparatus 50A receives the destination candidate data transmitted from the information processing apparatus 90.

Next, the display control unit 53 of the display apparatus 50A displays, on the display such as the display 506, a selection screen 400 including the destination candidate data received at S134, such as the selection screen 400 of FIG. 14 or 15 (S135). Processing from S135 to S139 are performed in the same or substantially the same manner as S75 to S79 described above with reference to FIG. 13, and thus redundant descriptions thereof are omitted below. Similarly to the above-described embodiment, the processing of setting a destination candidate illustrated in FIG. 27 is one example of processing of setting a movement candidate of the mobile apparatus 10A. The processing of setting may be performed not only for setting a destination candidate of the mobile apparatus 10A, but also for setting a candidate of a place to be excluded from the travel route of the mobile apparatus 10A.

As described above, the communication system 1A according to the first variation displays the selection screen 400 including the destination candidate image on the display apparatus 50A to allow the operator to select a destination of the mobile apparatus 10A, even when the destination candidate image is registered and managed at the information processing apparatus 90. This can improve operability for the operator in selecting the destination of the mobile apparatus 10A. Further, in the communication system 1A, the information processing apparatus 90 centrally manages registration of the destination candidate data. This allows the operator to select a movement destination using captured images acquired from different mobile apparatuses 10A. Accordingly, operability for the operator in setting the destination of the mobile apparatus 10A improves.

### Second Variation

Next, referring to FIGs. 28 to 30, a communication system 1B is described according to a second variation of the embodiment. In the second variation, the elements that are substantially same to the elements described in the above-described embodiment are assigned with the same reference numerals. For descriptive purposes, description thereof is omitted. The communication system 1B according to the second variation is a system, which displays an image provided from a service system N on a display apparatus 50B for selection by the operator to determine a destination of a mobile apparatus 10B.

FIG. 28 is a diagram illustrating an example of a configuration of the communication system 1B according to the second variation of the embodiment. The communication system 1B according to the second variation includes the mobile apparatus 10B, the display apparatus 50B, and the service system N that communicates with the mobile apparatus 10B and the display apparatus 50B via the communication network 100.

The service system N provides various services via the communication network 100. In this disclosure, the service system N is managed by the third party, such as a service provider. The service system N provides, for example, a cloud service referred to as a storage service (or online storage) for storing data files on a cloud, or a search service using a search engine through the Internet connection.

The display apparatus 50B executes a dedicated application installed in advance or accesses a web site using a web browser to acquire image data provided from the service system N, and selects a destination of the mobile apparatus 10B using the image data. The communication system 1B can acquire images captured in various places from the service system N, such that a place of an object to be captured is not restricted. Thus, the mobile apparatus 10B is not limited to a mobile apparatus that moves at the site as in the above-described embodiment, but may be a mobile apparatus that moves in a wide range without limiting a travel range. For example, the mobile apparatus 10B may be an automobile as illustrated in FIG. 28. In a case where the mobile apparatus 10B is an automobile, the display apparatus 50B may be a car navigation device mounted on the automobile, or a smartphone used by a driver riding on the automobile. In such case, the operation site and the control site is the same.

FIG. 29 is a sequence diagram illustrating example processing of setting a destination candidate of the mobile apparatus 10B, according to the second variation of the embodiment. Since the communication system 1B according to the second variation is a system that sets a destination using one or more images provided from the service system N, the processing of registering a destination candidate (see FIG. 9) described in the above-described embodiment is unnecessary.

The display control unit 53 of the display apparatus 50B accesses the service system N using a dedicated application or a web browser to display an image search screen 800 on a display such as the display 506 (S201). FIG. 30 is an illustration of an example image search screen 800. The image search screen 800 illustrated in FIG. 30 is a screen to be used for request searching of an image that can be acquired from the service system N. That is, the image search screen 800 is a service providing screen provided by the service system N, a suitable web site, etc.

The image search screen 800 includes a keyword input area 810 for inputting a keyword, and a search button 815 to be pressed to request search of an image using the keyword input in the keyword input area 810. The image search screen 800 further includes a location information input area 830 for inputting specific location information, a map reference button 831 to be pressed to display a map to be referred to for designating location information, and a search button 835 to be pressed to search images using location information input to the location information input area 830 or location information designated on the map displayed with selection of the map reference button 831. The image search screen 800 further includes a cancel button 805 to be pressed to cancel the image search.

The operation input unit 52 of the display apparatus 50B receives an input of a keyword or location information on the image search screen 800 (S202). When the operation input unit 52 receives the selection of the search button 815 or the search button 835, the transmission and reception unit 51 transmits an image acquisition request to the service system N (S203). This image acquisition request includes the input data received at S202.

Next, the service system N searches for one or more images based on the input data transmitted from the display apparatus 50B, and transmits the image data as a search result to the display apparatus 50B as the request source (S204). The transmission and reception unit 51 of the display apparatus 50B receives the image data transmitted from the service system N.

The transmission and reception unit 51 of the display apparatus 50B displays a selection screen 400, such as the selection screen 400 as illustrated in FIGs. 14 and 15 including the searched image data received at S204 on the display such as the display 506 (S205). In this case, the image data transmitted from the service system N is displayed in the image display area 410 of the selection screen 400. Processing from S206 to S209 are performed in the same or substantially the same manner as S76 to S79 described above with reference to FIG. 13, and thus redundant descriptions thereof are omitted below.

As described above, the communication system 1B according to the second variation is able to select a destination of the mobile apparatus 10B using image data provided from the service system N. It is thus not necessary to register the captured images captured by the mobile apparatus 10B as candidates of movement destination. This improves operability for the operator in selecting a movement destination of the mobile apparatus 10B. Further, the communication system 1B is able to acquire images captured at various places from the service system N through performing image search. This allows the operator to set a movement destination of the mobile apparatus 10B without being limited by a movement range of the mobile apparatus 10B.

FIG. 31 is a diagram illustrating an example of a functional configuration of the communication system 1B, according to the second variation. The display apparatus 50B of FIG. 31 has a same functional configuration as that of the display apparatus 50A of the communication system 1A illustrated in FIG. 25. The control device 30B that controls processing or operation of the mobile apparatus 10B has a configuration same as that of the control device 30A of FIG. 25, except that the route information generator 37, the route information manager 38, the destination setter 39, the learning unit 48, and the route information management DB 3002 in the storage unit 3000 are excluded.

The communication system 1B illustrated in FIG. 31 further includes an information processing apparatus 90B, which may reside on the service system N. The information processing apparatus 90B supports, for example, a cloud computing service such as AWS. In the communication system 1B, the display apparatus 50B and the mobile apparatus 10B (control device 30B) communicate with each other via the information processing apparatus 90 as indicated by arrows a and b. Further, the route information generator 37, the route information manager 38, the destination setter 39, the learning unit 48, and the route information management DB 3002 of the control device 30A, are now provided at the information processing apparatus 90B. The information processing apparatus 90B includes a transmission and reception unit 91, a map information manager 92, a route information generator 93, a route information manager 94, a movement destination setter 95, and a learning unit 96. The storage unit 9000 stores a destination candidate management DB 9001, a map information management DB 9002, a learning data management DB 9003, and a route information management DB 9004. Since the functions of the above-described units, excluded from the control device 30A (FIG. 25) and added to the information processing apparatus 90B, are the same as the functions described with reference to FIG. 25, description thereof is omitted.

As described above, in the communication system 1B, communication between the display apparatus 50B and the mobile apparatus 10B (control device 30B) is performed via the information processing apparatus 90B corresponding to the cloud computing service. In such information processing apparatus 90B on the service system N, by using authentication processing provided by the cloud computing service during communication, data to exchange, such as a manual operation command from the display apparatus 50B, or captured image data from the mobile apparatus 10B, are securely transmitted. Further, the information processing apparatus 90B (cloud service) is provided with the function of generating and managing data. Such data can be shared among a plurality of sites. This can flexibly support not only Peer to Peer (P2P) communication (one-to-one direct communication) but also one-to-multisite communication.

As described above, according to one embodiment, the display apparatus 50 (50A, 50B) performs a predetermined operation with respect to the mobile apparatus 10 (10A, 10B). Specifically, the display apparatus 50 acquires one or more captured images 415, displays the acquired captured images 415 in a manner selectable by the operator, and receives selection of one or more of the displayed captured images 415. The display apparatus 50 (50A, 50B) sets a movement destination of the mobile apparatus 10 (10A, 10B) based on an area indicated by each captured image 415 that is selected. With the above-described configuration of the display apparatus 50 (50A, 50B), operability for the operator in selecting a movement destination of the mobile apparatus 10 (10A, 10B) improves.

Specifically, in one example, the display apparatus 50 (50A, 50B) displays each of the acquired captured images 415 as an image indicating a candidate of a movement destination of the mobile apparatus 10 (10A, 10B). In response to selection by the operator, the display apparatus 50 (50A, 50B) selects an area indicated by the selects captured image 415 as a movement destination of the mobile apparatus 10. This can improve operability for the operator in selecting a movement destination of the mobile apparatus 10 (10A, 10B), compared to the method in which the operator specifies location information or a character string such as a keyword. Further, the display apparatus 50 (50A, 50B) displays, as an image indicating a candidate of movement destination of the mobile apparatus 10 (10A, 10B), an image indicating a candidate of a travel destination (that is, a final destination) that the mobile apparatus 10 heads for (10A, 10B). Accordingly, the display apparatus 50 (50A, 50B) selects an area indicated by the captured image 415 as a travel destination of the mobile apparatus 10, using the acquired captured image 415, which is an image of a travel destination candidate. This improves operability for the operator in selecting a travel destination of the mobile apparatus 10 (10A, 10B).

Furthermore, the display apparatus according to one embodiment causes the mobile apparatus 10 (10A, 10B) to autonomously move along a travel route, which is determined based on the area indicated by the captured image 415 that is selected. Specifically, the display apparatus 50 (50A, 50B) instructs the mobile apparatus 10 (10A, 10B) to autonomously move along the travel route, which is set based on the area indicated by the selected captured image 415. When the display apparatus 50 (50A, 50B) receives selection of a plurality of captured images 415, the display apparatus 50 instructs the mobile apparatus 10 (10A, 10B) to autonomously move to a plurality of movement destinations along the travel route, in an order of receiving selection for the plurality of captured images 415. That is, the display apparatus 50 (50A, 50B) allows the operator to sequentially select the plurality of captured images 415, one by one, to set an order of a plurality of movement destinations respectively indicated by the selected captured images 415. The mobile apparatus 10 (10A, 10B) autonomously moves along the travel route, which indicates to travel a plurality of movement destinations according to the order that is set.

In one example, the display apparatus 50 (50A, 50B) displays a time it takes for the mobile apparatus 10 (10A, 10B) to move to an area indicated by the captured image 415 that is selected. This allows the operator to appropriately determine whether or not to select a movement destination based on the time for movement, or determine an order of traveling to a plurality of movement destinations based on the time for movement.

In one example, the captured image that is displayed is a special image 450, such as a spherical image, obtained by capturing a part of the site where the mobile apparatus 10(10A, 10B) operates in all directions. In reception of selection of a specific position in the special image 450, the display apparatus 50 (50A, 50B) causes the mobile apparatus 10 (10A, 10B) to autonomously move along a travel route, which is generated based on the selected position on the special image 450. Accordingly, the display apparatus 50 (50A, 50B) allows the operator to select a specific position on the special image 450, as a candidate of a movement destination of the mobile apparatus 10 (10A, 10B). Thus, operability for the operator in selecting the movement destination of the mobile apparatus 10 (10A, 10B) improves.

In one example, the display apparatus 50 (50A, 50B) displays additional information 490 indicating characteristic of an object in the captured image 415, with the captured image 415. For example, the display apparatus 50 (50A, 50B) may display a name of the object in the captured image 415, as the additional information 490, with the captured image 415. This allows the operator to make determinations more appropriately, compared to a case where the movement destination of the mobile apparatus 10 is selected just by viewing the captured image 415.

According to another embodiment, the communication system 1 (1A, 1B) includes the display apparatus 50 (50A, 50B) for performing a predetermined operation with respect to the mobile apparatus 10 (50A, 50B), and the mobile apparatus 10 (10A, 10B) capable of communicating with the display apparatus 50 (50A, 50B). The mobile apparatus 10 (10A, 10B) generates route information indicating a travel route of the moving body 10 (10A, 10B) based on the location where the selected captured image 415 has been captured. The mobile apparatus 10 (10A, 10B) autonomously moves based on a travel route indicated by the generated route information. Accordingly, in the communication system 1 (1A, 1B), the mobile apparatus 10 (10A, 10B) autonomously moves according to the travel route generated based on the captured image 415 selected by the operator.

As described above, according to one embodiment, the display apparatus 50 (50A, 50B) performs a predetermined operation with respect to the mobile apparatus 10 (10A, 10B) that travels at a site. The display apparatus 50 (50A) acquires the captured image 415 of a part of the site, which has been captured with the mobile apparatus 10 (10A). The display apparatus 50 (50A) displays the acquired captured image 415 as information used for setting a movement destination of the mobile apparatus 10 (10A) that autonomously moves. Accordingly, the display apparatus 50 (50A) provides a display screen that allows the operator to easily select a movement destination of the mobile apparatus 10 (10A).

In one example, the display apparatus 50 (50A) acquires the captured image 415 of a part of the site, having been captured with the mobile apparatus 10 (10A) based on at least one of predetermined criteria, for example, according to a movement state of the mobile apparatus 10 (10A). The display apparatus 50 (50A) displays the captured image 415, which is automatically acquired based on at least one of predetermined criteria, for example, according to the movement state of the mobile apparatus 10 (10A). Accordingly, the display apparatus 50 (50A) provides a display screen (for example, the selection screen 400) that allows the operator to easily set a travel route of the mobile apparatus 10 (10A) that autonomously moves.

In one example, the display apparatus 50 (50A) acquires the captured image 415 captured when the mobile apparatus 10 (10A) performs a preset task. In another example, the display apparatus 50 (50A) acquires the captured image 415 captured when the mobile apparatus 10 (10A) has stopped. In another example, the display apparatus 50 (50A) acquires the captured image 415 captured when a specific object is detected along the travel route of the mobile apparatus 10 (10A). In another example, the display apparatus 50 (50A) acquires the captured image 415 captured when a direction of manual operation on the mobile apparatus 10 (10A) changes. The display apparatus 50 (50A) displays the captured image 415, which is automatically acquired based on predetermined criteria, for example, in relation to the movement state of the mobile apparatus 10 (10A). Accordingly, the display apparatus 50 (50A) provides a display screen (for example, the selection screen 400) that allows the operator to easily set a travel route of the mobile apparatus 10 (10A) that autonomously moves.

According to another embodiment, the communication system 1 (1A) includes the display apparatus 50 (50A) for performing a predetermined operation with respect to the mobile apparatus 10 (10A) that travels at the site, and the mobile apparatus 10 (10A) capable of communicating with the display apparatus 50 (50A). The mobile apparatus 10 (10A) moves according to a manual operation command indicating a manual operation received by the display apparatus 50 (50A). The mobile apparatus 10 (10A) acquires the captured image 415 captured at a current location of the mobile apparatus 10 (10A) according to the moving state of the mobile apparatus 10 (10A), which travels according to the manual operation. Accordingly, the communication system 1 (1A) automatically acquires the captured image 415 to be registered as a movement destination candidate, by capturing an area of the site with the mobile apparatus 10 according to the manual operation of the mobile apparatus 10. This reduces time and effort required to register the movement destination candidate.

The functionality of the elements disclosed herein may be implemented using circuitry or processing circuitry which includes general purpose processors, special purpose processors, integrated circuits, application specific integrated circuits (ASICs), digital signal processors (DSPs), field programmable gate arrays (FPGAs), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

Further, various tables of any one of the above-described embodiments may be generated by machine learning. Further, data of associated items can be classified, such that use of tables can be optional. In the present disclosure, machine learning is a technique that enables a computer to acquire human-like learning ability. Machine learning refers to a technology in which a computer autonomously generates an algorithm required for determination such as data identification from learning data loaded in advance, and applies the generated algorithm to new data to make a prediction. Any suitable learning method is applied for machine learning, for example, any one of supervised learning, unsupervised learning, semi-supervised learning, reinforcement learning, and deep learning, or a combination of two or more those learning.

Although the display apparatus, the communication system, the display control method, and the program according to one embodiment of the present invention have been described above, the present invention is not limited to the above-described embodiments, numerous additional modifications and variations are possible in light of the above teachings. For example, elements and/or features of different illustrative embodiments may be combined with each other and/or substituted for each other within the scope of the present invention. Any one of the above-described operations may be performed in various other ways, for example, in an order different from the one described above .

In one example, a display apparatus includes a reception unit configured to receive a plurality of captured images each having been obtained by capturing a part of a site by the mobile apparatus, and a display control unit configured to display the plurality of captured images as information used for setting a movement destination of the mobile apparatus that autonomously moves.

In one example, the captured image is captured by the mobile apparatus according to a request by the operator.

In one example, the captured image is captured by the mobile apparatus based on at least one of predetermined criteria, for example, according to a movement state of the mobile apparatus. Information on such predetermined criteria may be previously set for each mobile apparatus 10. In one example, the mobile apparatus captures an image when the mobile apparatus executes a preset task. In one example, the mobile apparatus captures an image when the mobile apparatus stops moving. In one example, the mobile apparatus captures an image when the mobile apparatus detects a specific object on travel route. For example, the specific object may be an intersection. In one example, the mobile apparatus captures an image when the mobile apparatus receives a manual operation command for changing a direction of movement of the mobile apparatus.

In one example, a communication system includes a display apparatus, and a mobile apparatus communicably connected with the display apparatus. The display apparatus includes a reception unit configured to receive a plurality of captured images each having been obtained by capturing a part of a site by the mobile apparatus, and a display control unit configured to display the plurality of captured images as information used for setting a movement destination of the mobile apparatus that autonomously moves.

In one example, the display apparatus further includes an operation input unit that receives a manual operation on the mobile apparatus from the user. The mobile apparatus includes a manual operation processor configured to control movement of the mobile apparatus according to the manual operation, and a destination candidate obtainer configured to obtain at least one image captured at a current location of the mobile apparatus, as at least one of the plurality of captured images to be stored in the storage unit.

In one example, the communication system further includes a storage unit that stores the at least one of the plurality of captured images, in association with location information of the at least one image that is captured.

In one example, the destination candidate obtainer is configured to obtain at least one image captured at a current location of the mobile apparatus when the mobile apparatus approaches an area indicated by the location information of one of the plurality of captured images stored in the storage unit.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium also includes a storage medium for storing processor readable code such as a floppy disk, a hard disk, a compact disc read-only memory (CD-ROM), a magnetic tape device, or a solid state memory device.

This patent application is based on and claims priority to Japanese Patent Application Nos. 2021-046758, filed on March 22, 2021, 2021-046773, filed on March 22, 2021, 2021-093753, filed on June 3, 2021, and 2022-021281, filed on February 15, 2022, in the Japan Patent Office.

### [Reference Signs List]

1, 1A, 1B Communication system
100 Communication network
10, 10A, 10B Mobile apparatus
30, 30A ,30B Control device
31 Transmission and reception unit
32 Determination unit
35 Location information obtainer
36 Destination candidate obtainer (example of second acquisition means)
37 Route information generator (example of route information generating means)
40 Movement controller (example of movement control means)
41 Image recognition processor
42 Mode setter
43 Autonomous movement processor
44 Manual operation processor (example of movement processing means)
45 Task execution unit
48 Learning unit
3000 Storage unit (example of storage means)
50, 50A, 50B Display apparatus
51 transmission and reception unit (example of acquisition means, example of transmission means)
52 Operation input unit (example of inputting means)
53 Display control unit (example of display control means)
56 Autonomous movement request generator (example of generation means)
90 Information processing apparatus
91 Transmission and reception unit
9000 Storage unit (example of storage means)
200 Operation screen
400, 400A, 400B, 400C, 400D, 400E Selection screen
415 Captured image
450 Special image
490 Additional information
600A and 600B Operation screen
800 Image search screen
45 Task execution unit
48 Learning unit
3000 Storage unit (example of storage means)
50, 50A, 50B Display apparatus
51 transmission and reception unit (example of acquisition means, example of transmission means)
52 Operation input unit (example of inputting means)
53 Display control unit (example of display control means)
56 Autonomous movement request generator (example of generation means)
90 Information processing apparatus
91 Transmission and reception unit
9000 Storage unit (example of storage means)
200 Operation screen
400, 400A, 400B, 400C, 400D, 400E Selection screen
415 Captured image
450 Special image
490 Additional information
600A and 600B Operation screen
800 Image search screen

## Claims

1. A display apparatus for remotely operating a mobile apparatus, **characterised in that** it comprises:
a display control unit (53) configured to display, on a display, a plurality of captured images which are captured by a image capturing device on board the mobile apparatus, for selection by a user; and
an operation input unit (52) configured to receive selection of one or more captured images from among the plurality of captured images being displayed,
wherein one or more movement destinations of the mobile apparatus are set, based on the one or more selected captured images, and
wherein the display control unit (53) is configured to further display, for at least one of the one or more selected captured images, additional information indicating a characteristic of an object in the captured image.

2. The display apparatus of claim 1, wherein
the one or more selected captured images include a captured image representing a final destination to which the mobile apparatus travels.

3. The display apparatus of claim 2, wherein
the one or more selected captured images further include captured images each representing a waypoint to the final destination though which the mobile apparatus travels.

4. The display apparatus of any one of claims 1 to 3, wherein
the operation input unit (52) receives the selection of the one or more captured images in an order, the display apparatus further comprising:
an autonomous movement request generator (56) configured to generate autonomous movement request information including information on the order in which the one or more captured images are selected, which causes the mobile apparatus to autonomously move to the one or more movement destinations in the order in which the corresponding one or more captured images are selected.

5. The display apparatus of any one of claims 1 to 4,
wherein the display control unit (53) is further configured to display an estimated time for the mobile apparatus to move to at least one of the one or more movement destinations.

6. The display apparatus of any one of claims 1 to 5, wherein
the captured image is a spherical image of a site where the mobile apparatus is provided,
the operation input unit (52) receives selection of a position on the spherical image being displayed, the display apparatus further comprising:
an autonomous movement request generator (56) configured to generate autonomous movement request information further including information on the position on the spherical image, which causes the mobile apparatus to autonomously move to an area indicated by the position on the spherical image that is selected.

7. The display apparatus of any one of claims 1 to 6, wherein
the display control unit (53) is configured to further display a map image indicating a location where the captured image was captured for each of the one or more selected captured images.

8. The display apparatus of any one of claims 1 to 7, wherein
the display control unit (53) is configured to further display a current location of the mobile apparatus that has started to autonomously move to the area indicated by the captured image that is selected.

9. The display apparatus of any one of claims 1 to 8, wherein
the operation input unit (52) is further configured to receive information on a site where the mobile apparatus is provided, and the display apparatus further comprises
a reception unit (51) configured to receive the plurality of captured images specific to the site where the mobile apparatus is provided.

10. The display apparatus of claim 1, wherein the display apparatus further comprises:
a reception unit (51) configured to receive the plurality of captured images;
an autonomous movement request generator (56) configured to generate autonomous movement request information including information on the one or more selected captured images; and
a transmission unit (51) configured to transmit the autonomous movement request information that causes the mobile apparatus to autonomously move to the one or more movement destinations each corresponding to the area indicated by corresponding one of the one or more selected captured images.

11. A communication system comprising:
the display apparatus of any one of claims 1 to 10; and
a mobile apparatus (10) configured to autonomously move to the one or more movement destinations according to a request from the display apparatus.

12. The communication system of claim 11, wherein
the mobile apparatus (10) includes :
a route information generator (37) configured to generate route information indicating a travel route of the mobile apparatus based on location information of each of the one or more selected captured images, each location information indicating a location where the captured image was captured; and
a movement controller (40) configured to control the mobile apparatus to autonomously move based on the travel route indicated by the route information.

13. The communication system of claim 11 or 12, further comprising:
a storage unit (49) configured to store a plurality of captured images captured by the mobile apparatus,
wherein the display apparatus obtains the plurality of captured images for display from the storage unit (49).

14. The communication system of claim 13, wherein
the mobile apparatus includes an image capturing control unit (33) configured to capture the plurality of captured images to be stored in the storage unit (49), based on at least one of predetermined criteria.

## Patentansprüche

1. Anzeigeeinrichtung zur Fernbedienung einer mobilen Einrichtung, **dadurch gekennzeichnet, dass** sie umfasst:
eine Anzeigesteuereinheit (53), die dazu konfiguriert ist, auf einer Anzeige eine Vielzahl von erfassten Bildern, die von einer Bilderfassungsvorrichtung an Bord der mobilen Einrichtung erfasst werden, zur Auswahl durch einen Benutzer anzuzeigen; und
eine Bedieneingabeeinheit (52), die dazu konfiguriert ist, die Auswahl eines oder mehrerer erfasster Bilder aus der Vielzahl von erfassten Bildern, die angezeigt werden, zu empfangen,
wobei ein oder mehrere Bewegungsziele der mobilen Einrichtung auf Basis des einen oder der mehreren ausgewählten erfassten Bilder festgelegt werden, und
wobei die Anzeigesteuereinheit (53) dazu konfiguriert ist, für mindestens eines des einen oder der mehreren ausgewählten erfassten Bilder weiter zusätzliche Informationen anzuzeigen, die ein Merkmal eines Objekts in dem erfassten Bild angeben.

2. Anzeigeeinrichtung nach Anspruch 1, wobei
das eine oder die mehreren ausgewählten erfassten Bilder ein erfasstes Bild beinhalten, das ein Endziel darstellt, zu dem die mobile Einrichtung fährt.

3. Anzeigeeinrichtung nach Anspruch 2, wobei
das eine oder die mehreren ausgewählten erfassten Bilder weiter erfasste Bilder beinhalten, die jeweils einen Wegpunkt zu dem Endziel darstellen, an dem die mobile Einrichtung vorbeifährt.

4. Anzeigeeinrichtung nach einem der Ansprüche 1 bis 3, wobei
die Bedieneingabeeinheit (52) die Auswahl des einen oder der mehreren erfassten Bilder in einer Reihenfolge empfängt, wobei die Anzeigeeinrichtung weiter umfasst:
einen Generator (56) für autonome Bewegungsanforderungen, der dazu konfiguriert ist, Informationen für autonome Bewegungsanforderungen zu generieren, die Informationen über die Reihenfolge beinhalten, in der das eine oder die mehreren erfassten Bilder ausgewählt werden, wodurch die mobile Einrichtung dazu gebracht wird, sich autonom in der Reihenfolge, in der das eine oder die mehreren entsprechenden erfassten Bilder ausgewählt werden, zu dem einen oder den mehreren Bewegungszielen zu bewegen.

5. Anzeigeeinrichtung nach einem der Ansprüche 1 bis 4,
wobei die Anzeigesteuereinheit (53) weiter dazu konfiguriert ist, eine geschätzte Zeit anzuzeigen, die die mobile Einrichtung benötigt, um sich zu mindestens einem des einen oder der mehreren Bewegungsziele zu bewegen.

6. Anzeigeeinrichtung nach einem der Ansprüche 1 bis 5, wobei
das erfasste Bild ein Rundumbild eines Standorts ist, an dem die mobile Einrichtung bereitgestellt wird,
die Bedieneingabeeinheit (52) die Auswahl einer Position in dem Rundumbild, das angezeigt wird, empfängt, wobei die Anzeigeeinrichtung weiter umfasst:
einen Generator (56) für autonome Bewegungsanforderungen, der dazu konfiguriert ist, Informationen für autonome Bewegungsanforderungen zu generieren, die weiter Informationen über die Position in dem Rundumbild beinhalten, wodurch die mobile Einrichtung dazu gebracht wird, sich autonom zu einem Gebiet zu bewegen, das durch die Position in dem Rundumbild, die ausgewählt ist, angegeben wird.

7. Anzeigeeinrichtung nach einem der Ansprüche 1 bis 6, wobei
die Anzeigesteuereinheit (53) dazu konfiguriert ist, für jedes des einen oder der mehreren ausgewählten erfassten Bilder weiter ein Kartenbild anzuzeigen, das einen Standort angibt, an dem das erfasste Bild erfasst wurde.

8. Anzeigeeinrichtung nach einem der Ansprüche 1 bis 7, wobei
die Anzeigesteuereinheit (53) dazu konfiguriert ist, weiter einen aktuellen Standort der mobilen Einrichtung anzuzeigen, die begonnen hat, sich autonom zu dem Gebiet zu bewegen, das durch das erfasste Bild, das ausgewählt ist, angezeigt wird.

9. Anzeigeeinrichtung nach einem der Ansprüche 1 bis 8, wobei
die Bedieneingabeeinheit (52) weiter dazu konfiguriert ist, Informationen über einen Standort zu empfangen, an dem die mobile Einrichtung bereitgestellt wird, und die Anzeigeeinrichtung weiter umfasst
eine Empfangseinheit (51), die dazu konfiguriert ist, die Vielzahl von erfassten Bildern zu empfangen, die für den Standort, an dem die mobile Einrichtung bereitgestellt wird, spezifisch sind.

10. Anzeigeeinrichtung nach Anspruch 1, wobei die Anzeigeeinrichtung weiter umfasst:
eine Empfangseinheit (51), die dazu konfiguriert ist, die Vielzahl von erfassten Bildern zu empfangen;
einen Generator (56) für autonome Bewegungsanforderungen, der dazu konfiguriert ist, Informationen für autonome Bewegungsanforderungen zu generieren, die Informationen über das eine oder die mehreren ausgewählten erfassten Bilder beinhalten; und
eine Übertragungseinheit (51), die dazu konfiguriert ist, die Informationen für autonome Bewegungsanforderungen zu übertragen, wodurch die mobile Einrichtung dazu gebracht wird, sich autonom zu dem einen oder den mehreren Bewegungszielen zu bewegen, die jeweils dem Gebiet entsprechen, das durch ein entsprechendes des einen oder der mehreren ausgewählten erfassten Bilder angegeben wird.

11. Kommunikationssystem, umfassend:
die Anzeigeeinrichtung nach einem der Ansprüche 1 bis 10; und
eine mobile Einrichtung (10), die dazu konfiguriert ist, sich gemäß einer Anforderung von der Anzeigeeinrichtung autonom zu dem einen oder den mehreren Bewegungszielen zu bewegen.

12. Kommunikationssystem nach Anspruch 11, wobei
die mobile Einrichtung (10) beinhaltet:
einen Generator (37) für Routeninformationen, der dazu konfiguriert ist, Routeninformationen zu generieren, die eine Fahrtroute der mobilen Einrichtung auf Basis von Standortinformationen jedes des einen oder der mehreren ausgewählten erfassten Bilder angeben, wobei jede Standortinformation einen Standort angibt, an dem das erfasste Bild erfasst wurde; und
eine Bewegungssteuereinheit (40), die dazu konfiguriert ist, die mobile Einrichtung so zu steuern, dass sie sich auf Basis der von den Routeninformationen angegebenen Fahrtroute autonom bewegt.

13. Kommunikationssystem nach Anspruch 11 oder 12, weiter umfassend:
eine Speichereinheit (49), die dazu konfiguriert ist, eine Vielzahl von erfassten Bildern zu speichern, die von der mobilen Einrichtung erfasst werden,
wobei die Anzeigeeinrichtung die Vielzahl von erfassten Bildern zur Anzeige von der Speichereinheit (49) erhält.

14. Kommunikationssystem nach Anspruch 13, wobei
die mobile Einrichtung eine Bilderfassungssteuereinheit (33) beinhaltet, die dazu konfiguriert ist, die Vielzahl von erfassten Bildern, die in der Speichereinheit (49) gespeichert werden sollen, auf Basis mindestens eines von vorbestimmten Kriterien zu erfassen.

## Revendications

1. Appareil d'affichage permettant de commander à distance un appareil mobile, **caractérisé en ce qu'**il comprend :
une unité de commande d'affichage (53) configurée pour afficher, sur un écran, une pluralité d'images capturées qui sont capturées par un dispositif de capture d'images à bord de l'appareil mobile, pour sélection par un utilisateur ; et
une unité d'entrée d'opération (52) configurée pour recevoir la sélection d'une ou plusieurs images capturées parmi la pluralité d'images capturées affichées,
dans lequel une ou plusieurs destinations de déplacement de l'appareil mobile sont définies, sur la base des une ou plusieurs images capturées sélectionnées, et
dans lequel l'unité de commande d'affichage (53) est configurée pour afficher en outre, pour au moins l'une des une ou plusieurs images capturées sélectionnées, des informations supplémentaires indiquant une caractéristique d'un objet dans l'image capturée.

2. Appareil d'affichage selon la revendication 1, dans lequel
les une ou plusieurs images capturées sélectionnées incluent une image capturée représentant une destination finale vers laquelle l'appareil mobile se déplace.

3. Appareil selon la revendication 2, dans lequel
les une ou plusieurs images capturées sélectionnées incluent en outre des images capturées représentant chacune un point de cheminement vers la destination finale par lequel passe l'appareil mobile.

4. Appareil d'affichage selon l'une quelconque des revendications 1 à 3, dans lequel
l'unité d'entrée d'opération (52) reçoit la sélection des une ou plusieurs images capturées dans un ordre, l'appareil d'affichage comprenant en outre :
un générateur de demande de déplacement autonome (56) configuré pour générer des informations de demande de déplacement autonome incluant des informations sur l'ordre dans lequel les une ou plusieurs images capturées sont sélectionnées, ce qui amène l'appareil mobile à se déplacer de manière autonome vers les une ou plusieurs destinations de déplacement dans l'ordre dans lequel les une ou plusieurs images capturées correspondantes sont sélectionnées.

5. Appareil d'affichage selon l'une quelconque des revendications 1 à 4,
dans lequel l'unité de commande d'affichage (53) est en outre configurée pour afficher un temps estimé nécessaire à l'appareil mobile pour atteindre au moins l'une des une ou plusieurs destinations de déplacement.

6. Appareil d'affichage selon l'une quelconque des revendications 1 à 5, dans lequel
l'image capturée est une image sphérique d'un site où se trouve l'appareil mobile,
l'unité d'entrée d'opération (52) reçoit la sélection d'une position sur l'image sphérique affichée, l'appareil d'affichage comprenant en outre :
un générateur de demande de déplacement autonome (56) configuré pour générer des informations de demande de déplacement autonome incluant en outre des informations sur la position sur l'image sphérique, ce qui amène l'appareil mobile à se déplacer de manière autonome vers une zone indiquée par la position sur l'image sphérique qui est sélectionnée.

7. Appareil d'affichage selon l'une quelconque des revendications 1 à 6, dans lequel
l'unité de commande d'affichage (53) est configurée pour afficher en outre une image cartographique indiquant un emplacement où l'image capturée a été capturée pour chacune des une ou plusieurs images capturées sélectionnées.

8. Appareil d'affichage selon l'une quelconque des revendications 1 à 7, dans lequel
l'unité de commande d'affichage (53) est configurée pour afficher en outre un emplacement actuel de l'appareil mobile qui a commencé à se déplacer de manière autonome vers la zone indiquée par l'image capturée qui est sélectionnée.

9. Appareil d'affichage d'image selon l'une quelconque des revendications 1 à 8, dans lequel
l'unité d'entrée d'opération (52) est en outre configurée pour recevoir des informations sur un site où se trouve l'appareil mobile, et l'appareil d'affichage comprend en outre
une unité de réception (51) configurée pour recevoir la pluralité d'images capturées spécifiques au site où se trouve l'appareil mobile.

10. Appareil d'affichage selon la revendication 1, dans lequel l'appareil d'affichage comprend en outre :
une unité de réception (51) configurée pour recevoir la pluralité d'images capturées ;
un générateur de demande de déplacement autonome (56) configuré pour générer des informations de demande de déplacement autonome incluant des informations sur les une ou plusieurs images capturées sélectionnées ; et
une unité de transmission (51) configurée pour transmettre les informations de demande de déplacement autonome qui amènent l'appareil mobile à se déplacer de manière autonome vers les une ou plusieurs destinations de déplacement correspondant chacune à la zone indiquée par l'une des une ou plusieurs images capturées sélectionnées correspondante.

11. Système de communication comprenant :
l'appareil d'affichage selon l'une quelconque des revendications 1 à 10 ; et
un appareil mobile (10) configuré pour se déplacer de manière autonome vers une ou plusieurs destinations de déplacement en fonction d'une demande provenant de l'appareil d'affichage.

12. Système de communication selon la revendication 11, dans lequel
l'appareil mobile (10) inclut :
un générateur d'informations de trajectoire (37) configuré pour générer des informations de trajectoire indiquant une trajectoire de course de l'appareil mobile en fonction des informations de localisation de chacune des une ou plusieurs images capturées sélectionnées, chaque information de localisation indiquant un emplacement où l'image capturée a été capturée ; et
un dispositif de commande de déplacement (40) configuré pour commander l'appareil mobile afin qu'il se déplace de manière autonome en fonction de la trajectoire de course indiquée par les informations de trajectoire.

13. Système de communication selon la revendication 11 ou 12, comprenant en outre :
une unité de stockage (49) configurée pour stocker une pluralité d'images capturées par l'appareil mobile,
dans lequel l'appareil d'affichage obtient de l'unité de stockage (49) la pluralité d'images capturées à afficher.

14. Système de communication selon la revendication 13, dans lequel
l'appareil mobile inclut une unité de commande de capture d'images (33) configurée pour capturer la pluralité d'images capturées à stocker dans l'unité de stockage (49), sur la base d'au moins un critère prédéterminé.
